# EUROPEAN PATENT APPLICATION

(11) **EP 4 712 539 A1**
(43) Date of publication of application: **18.03.2026**
(21) Application number: 24806393.5
(22) Date of filing: 07.05.2024
(51) Int. Cl.: H04W 24/02

(54) **INFORMATION PROCESSING METHOD AND APPARATUS, INFORMATION TRANSMISSION METHOD AND APPARATUS, AND RELATED DEVICE**

(30) Priority: 12.05.2023 CN 202310543097
(71) Applicant: Vivo Mobile Communication Co., Ltd., Dongguan, Guangdong 523863 (CN)
(72) Inventor: ZHANG, Yizhong, Dongguan, Guangdong 523863 (CN)
(74) Representative: Michalski Hüttermann & Partner Patentanwälte mbB
(86) International application number: PCT/CN2024/091301
(87) International publication number: WO 2024/235037

(57) **Abstract**

This application discloses an information processing method and apparatus, an information transmission method and apparatus, and a related device, pertaining to the field of communication technologies. The information processing method of embodiments of this application includes: receiving, by a personal IoT network PIN server, first information, where the first information meets at least one of the following: the first information is related to a PIN element with gateway capability PEGC, and the first information includes a first request for requesting creation of a PIN; and performing, by the PIN server, a first operation based on the first information, where the first operation includes at least one of the following: determining PEGC information in the PIN; rejecting the first request; deactivating the PIN; updating personal IoT network element PINE information of a PEGC in the PIN; and sending second information to a PIN element with management capability PEMC, where the second information is used to indicate a PINE that accepts to act as a PEGC in the PIN, or the second information indicates accepting the first request.

## Description

### CROSS-REFERENCE TO RELATED APPLICATIONS

This application claims priority to Chinese Patent Application No. 202310543097.X, filed in China on May 12, 2023, which is incorporated herein by reference in its entirety.

### TECHNICAL FIELD

This application pertains to the field of communication technologies, and specifically, relates to an information processing method and apparatus, an information transmission method and apparatus, and a related device.

### BACKGROUND

In a personal IoT network (Personal IoT Network, PIN), it is necessary to manage the PIN using a PIN element with management capability (PIN element with management capability, PEMC) and provide data routing or communication for devices in the PIN using a PIN element with gateway capability (PIN element with Gateway capability, PEGC).

However, in some cases, no PEGC is present in the PIN. For example, during creation of a PIN by the PEMC, if no suitable PIN element (PIN element, PINE) can act as a PEGC in the PIN, a PIN server may indicate a PEMC or another PINE that does not possess PEGC-related capabilities as the PEGC. As a result, devices within the PIN are unable to normally route data or communicate due to absence of the PEGC.

### SUMMARY

Embodiments of this application provide an information processing method and apparatus, an information transmission method and apparatus, and a related device, so that a PIN server can obtain first information related to a PIN element with gateway capability PEGC, and then determine based on the first information whether there is an available PEGC in a specific PIN; and if not, reject a PIN creation request or deactivate the PIN; or if yes, indicate a PECG for the PIN in a targeted manner, thus reducing a probability that devices in the PIN are unable to normally route data or communicate due to absence of the PEGC.

According to a first aspect, an information processing method is provided, where the method includes:
receiving, by a personal IoT network PIN server, first information, where the first information meets at least one of the following:
the first information is related to a PIN element with gateway capability PEGC; and
the first information includes a first request for requesting creation of a PIN; and
performing, by the PIN server, a first operation based on the first information, where the first operation includes at least one of the following:
   determining PEGC information in the PIN;
   rejecting the first request;
   deactivating the PIN;
   updating personal IoT network element PINE information of a PEGC in the PIN; and
   sending second information to a PIN element with management capability PEMC, where the second information is used to indicate a PINE that accepts to act as a PEGC in the PIN, or the second information indicates accepting the first request.

According to a second aspect, an information transmission method is provided, where the method includes:
sending, by a PEMC, first information to a PIN server; where
the first information includes at least one of the following:
   first identification information, used to identify a PINE that does not accept to act as the PEGC in the PIN;
   second identification information, used to identify the PEMC, where the PEMC has no gateway capability;
   first indication information, used to indicate that a PIN created by the PEMC is in a deactivated state or indicate that no PEGCs are available for the PIN;
   second indication information, used to indicate that a PINE corresponding to the first identification information does not accept to act as the PEGC in the PIN, or that a PEMC corresponding to the second identification information does not have gateway capability; and
   a first request, where the first request is used to request creation of a PIN.

According to a third aspect, an information transmission method is provided, where the method includes:
sending, by a PINE, first information to a PIN server; where
the first information includes at least one of the following:
   third indication information, used to indicate whether the PINE has or does not have gateway capability;
   fourth indication information, used to indicate that the PINE accepts or rejects to act as a PEGC in a PIN; and
   parameter information of the PINE.

According to a fourth aspect, an information processing apparatus is provided, including:
a first receiving module, configured to receive first information, where the first information meets at least one of the following:
the first information is related to a PIN element with gateway capability PEGC; and
the first information includes a first request for requesting creation of a PIN; and
a first execution module, configured to perform a first operation based on the first information, where the first operation includes at least one of the following:
   determining PEGC information in the PIN;
   rejecting the first request;
   deactivating the PIN;
   updating personal IoT network element PINE information of a PEGC in the PIN; and
   sending second information to a PIN element with management capability PEMC, where the second information is used to indicate a PINE that accepts to act as a PEGC in the PIN, or the second information indicates accepting the first request.

According to a fifth aspect, an information transmission apparatus is provided, including:
a first sending module, configured to send first information to a PIN server; where
the first information includes at least one of the following:
   first identification information, used to identify a PINE that does not accept to act as the PEGC in the PIN;
   second identification information, used to identify a PEMC, where the PEMC has no gateway capability;
   first indication information, used to indicate that a PIN created by the PEMC is in a deactivated state or indicate that no PEGCs are available for the PIN;
   second indication information, used to indicate that a PINE corresponding to the first identification information does not accept to act as the PEGC in the PIN, or that a PEMC corresponding to the second identification information does not have gateway capability; and
   a first request, where the first request is used to request creation of a PIN.

According to a sixth aspect, an information transmission apparatus is provided, including:
a second sending module, configured to send first information to a PIN server; where
the first information includes at least one of the following:
   third indication information, used to indicate whether a PINE has or does not have gateway capability;
   fourth indication information, used to indicate that a PINE accepts or rejects to act as a PEGC in a PIN; and
   parameter information of a PINE.

According to a seventh aspect, a terminal is provided, where the terminal includes a processor and a memory, and a program or instructions capable of running on the processor are stored in the memory. When the program or the instructions are executed by the processor, the steps of the method according to the second aspect or the third aspect are implemented.

According to an eighth aspect, a terminal is provided, including a processor and a communication interface, where
the communication interface is configured to send first information to a PIN server; where
the first information includes at least one of the following:
   first identification information, used to identify a PINE that does not accept to act as the PEGC in the PIN;
   second identification information, used to identify a PEMC, where the PEMC has no gateway capability;
   first indication information, used to indicate that a PIN created by the PEMC is in a deactivated state or indicate that no PEGCs are available for the PIN;
   second indication information, used to indicate that a PINE corresponding to the first identification information does not accept to act as the PEGC in the PIN, or that a PEMC corresponding to the second identification information does not have gateway capability; and
   a first request, where the first request is used to request creation of a PIN;
      or,
   the communication interface is configured to send first information to a PIN server; where
   the first information includes at least one of the following:
      third indication information, used to indicate whether a PINE has or does not have gateway capability;
      fourth indication information, used to indicate that a PINE accepts or rejects to act as a PEGC in a PIN; and
      parameter information of a PINE.

According to a ninth aspect, a network-side device is provided, where the network-side device includes a processor and a memory, where a program or instructions capable of running on the processor are stored in the memory. When the program or the instructions are executed by the processor, the steps of the method according to the first aspect, or the second aspect, or the third aspect are implemented.

According to a tenth aspect, a network-side device is provided, including a processor and a communication interface, where
the communication interface is configured to receive first information, where the first information meets at least one of the following:
the first information is related to a PIN element with gateway capability PEGC; and
the first information includes a first request for requesting creation of a PIN; and
the processor is configured to perform a first operation based on the first information, where the first operation includes at least one of the following:
   determining PEGC information in the PIN;
   rejecting the first request;
   deactivating the PIN;
   updating personal loT network element PINE information of a PEGC in the PIN; and
   sending second information to a PIN element with management capability PEMC, where the second information is used to indicate a PINE that accepts to act as a PEGC in the PIN, or the second information indicates accepting the first request;
      or,
   the communication interface is configured to send first information to a PIN server; where
   the first information includes at least one of the following:
      first identification information, used to identify a PINE that does not accept to act as the PEGC in the PIN;
      second identification information, used to identify a PEMC, where the PEMC has no gateway capability;
      first indication information, used to indicate that a PIN created by the PEMC is in a deactivated state or indicate that no PEGCs are available for the PIN;
      second indication information, used to indicate that a PINE corresponding to the first identification information does not accept to act as the PEGC in the PIN, or that a PEMC corresponding to the second identification information does not have gateway capability; and
      a first request, where the first request is used to request creation of a PIN;
         or,
      the communication interface is configured to send first information to a PIN server; where
      the first information includes at least one of the following:
         third indication information, used to indicate whether a PINE has or does not have gateway capability;
         fourth indication information, used to indicate that a PINE accepts or rejects to act as the PEGC in the PIN; and
         parameter information of a PINE.

According to an eleventh aspect, a readable storage medium is provided, where the readable storage medium stores a program or instructions, and when the program or instructions are executed by the processor, the steps of the method according to the first aspect are implemented, or the steps of the method according to the second aspect are implemented, or the steps of the method according to the third aspect are implemented.

According to a twelfth aspect, a communication system is provided, including a PIN server, a PEMC, and a PINE, where the PIN server can be configured to perform the steps of the method according to the first aspect, the PEMC can be configured to perform the steps of the method according to the second aspect, and the PINE can be configured to perform the steps of the method according to the third aspect.

According to a thirteenth aspect, a chip is provided, where the chip includes a processor and a communication interface, the communication interface is coupled to the processor, and the processor is configured to run a program or instructions to implement the method according to the first aspect, or the method according to the second aspect, or the method according to the third aspect.

According to a fourteenth aspect, a computer program/program product is provided, where the computer program/program product is stored in a storage medium, and the computer program/program product is executed by at least one processor to implement the steps of the information processing method according to the first aspect, or the steps of the information transmission method according to the second aspect, or the steps of the information transmission method according to the third aspect.

In the embodiments of this application, the PIN server can obtain first information related to a PEGC, and then determine based on the first information whether there is a PEGC available in a specific PIN. If not, the PIN server can reject a request of creating the PIN, or deactivate the PIN, or create the deactivated PIN; or if yes, the PIN server can indicate a PEGC for the PIN in a targeted manner. Alternatively, the PIN server can update, based on the first information, information about a PINE supporting to act as a PEGC in the PIN, so that the PEMC can determine an available PEGC based on the updated information about the PINE supporting to act as a PEGC in the PIN. This can effectively reduce a probability that the devices in the PIN cannot normally route data or communication due to no PEGC, thereby ensuring the reliability of communication.

### BRIEF DESCRIPTION OF DRAWINGS

FIG. 1a is a schematic structural diagram of a wireless communication system to which embodiments of this application are applicable;
FIG. 1b is a flowchart of creating a PIN in the related art;
FIG. 2 is a flowchart of an information processing method according to an embodiment of this application;
FIG. 3 is a flowchart of an information transmission method according to an embodiment of this application;
FIG. 4 is a flowchart of another information transmission method according to an embodiment of this application;
FIG. 5a is a first schematic diagram of interaction between a PIN server, a PEMC, and a PINE;
FIG. 5b is a second schematic diagram of interaction between a PIN server, a PEMC, and a PINE;
FIG. 5c is a third schematic diagram of interaction between a PIN server, a PEMC, and a PINE;
FIG. 6 is a schematic structural diagram of an information processing apparatus according to an embodiment of this application;
FIG. 7 is a schematic structural diagram of an information transmission apparatus according to an embodiment of this application;
FIG. 8 is a schematic structural diagram of another information transmission apparatus according to an embodiment of this application;
FIG. 9 is a schematic structural diagram of a communication device according to an embodiment of this application;
FIG. 10 is a schematic structural diagram of a terminal according to an embodiment of this application;
FIG. 11 is a schematic structural diagram of a network-side device according to an embodiment of this application; and
FIG. 12 is a schematic structural diagram of another network-side device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in this application are used to distinguish between similar objects instead of describing a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, the "or" in this application means at least one of the associated objects. For example, "A or B" covers three schemes, namely, scheme 1: including A not B; scheme 2: including B not A; and scheme 3: including both A and B. The character "/" generally indicates an "or" relationship between associated objects.

The term "indication" in this application may be either a direct indication (or an explicit indication) or an indirect indication (or an implicit indication). The direct indication may be understood as: a sender explicitly notifies, in a sent indication, a receiver of content such as specific information, an operation that needs to be performed, or a request result; and the indirect indication may be understood as: the receiver determines corresponding information or performs determining according to the indication sent by the sender, and determines, according to a determining result, an operation that needs to be performed or a request result.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), or other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other systems than an NR system, for example, the 6th generation (6^{th} Generation, 6G) communication system.

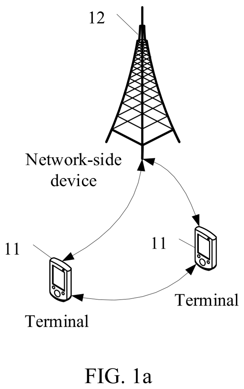

FIG. 1a is a block diagram of a wireless communication system to which embodiments of this application are applicable. The wireless communication system includes a terminal 11 and a network-side device 12. The terminal 11 may be a terminal-side device such as a mobile phone, a tablet computer (Tablet Personal Computer), a laptop computer (Laptop Computer), a notebook computer a personal digital assistant (personal digital assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), flight vehicle (flight vehicle), vehicle user equipment (Vehicle User Equipment, VUE), ship equipment, pedestrian user equipment (Pedestrian User Equipment, PUE), a smart home device (a home device with wireless communication function, such as a refrigerator, a television, a washing machine, or a furniture), a game console, a personal computer (Personal Computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart strap, smart clothing, and the like. The vehicle user equipment may alternatively be referred to as a vehicle-mounted terminal, a vehicle-mounted controller, a vehicle-mounted module, a vehicle-mounted component, a vehicle-mounted chip, or vehicle-mounted unit. It should be noted that the terminal 11 is not limited to any specific type in the embodiments of this application. The network-side device 12 may include an access network device or a core network device, where the access network device may also be referred to as a radio access network (Radio Access Network, RAN), a radio access network function, or a radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as a Node B (Node B, NB), an evolved Node B (Evolved Node B, eNB), a next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home Node B (home Node B, HNB), a home evolved Node B (home evolved Node B), a transmission and reception point (Transmission Reception Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in the embodiments of this application, only the core network device in the NR system is introduced as an example, and the specific type of the core network device is not limited. It should be noted that in the embodiments of this application, only the core network device in the NR system is introduced as an example, and the specific type of the core network device is not limited.

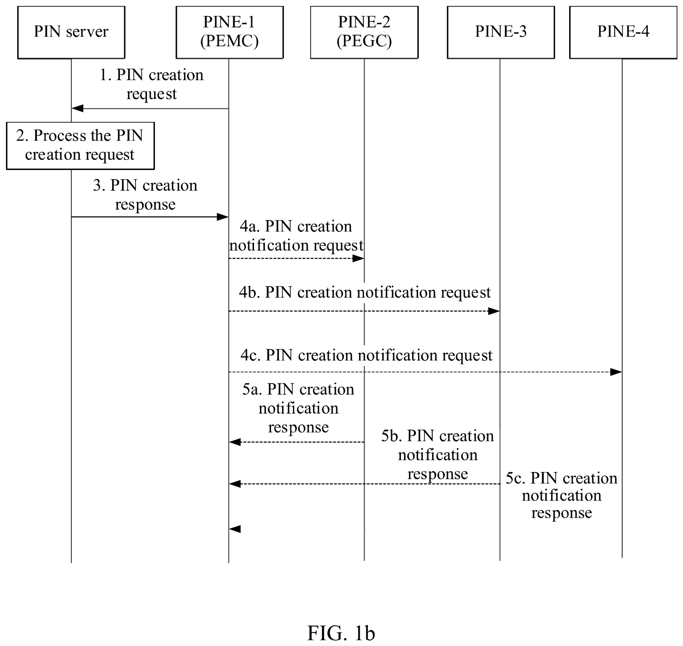

As shown in FIG. 1b, in the related art, the process of creating a PIN is as follows.

Step 1: A PEMC sends a PIN creation request to a PIN server to create a PIN. The PIN creation request includes a security credential of user equipment (User Equipment, UE) or PINE-1 received (for example, being obtained through Bluetooth or PIN) during an authorization process, and the PIN creation request may include a UE identifier, such as at least one of identification information such as a generic public subscription identifier (Generic Public Subscription Identifier, GPSI), a PIN client identifier (Identifier, ID), a UE location, and PIN client profile information.

It should be noted that the request from the PEMC to create a PIN may include detailed information about other PIN elements (PIN list) with which it has established a connection. The detailed information about PIN elements may include a UE identifier, such as GPSI, PIN client ID, UE location, and PIN client profile information. If the request from the PEMC to create a PIN does not include other PIN elements, the PEMC requests to create a PIN that includes itself.

To save processes involving multiple PEMCs for a specific PIN as separate PEMCs, the PEMC may include a GPSI or PIN client ID of an additional PEMC in the PIN creation request to indicate the additional PEMC allowed to manage the PIN. This procedure does not conflict with other PEMCs requesting to join a specific PIN and remains separate as a PEMC. It should be noted that for a PIN, only one PEMC can be assigned the primary role at a time, while other PEMCs (if any) may be assigned secondary roles.

Step 2: The PIN server processes the PIN creation request.

In this step, upon receiving the request, the PIN server may perform an authorization check to verify whether the PEMC (PINE 1) is authorized to perform a PIN creation operation.

Step 3. The PIN server sends a PIN creation response to PEMC, where the response includes a newly allocated PIN ID for indicating the PIN. It also includes a list of PIN elements and their identifiers. If the PIN creation request includes a list of PIN elements to be included in the PIN, these PIN elements and their identifiers are authorized and become members of the newly created PIN.

It should be noted that if the PIN creation request fails, the PIN server should provide a failure response indicating a cause for the failure of the PIN creation request.

If the PIN creation request does not include other PIN elements and the PIN creation is successful, the PIN server indicates the PEMC as a PEGC. A PEMC already playing the PEMC role can also play the PEGC role

If one or more PEGCs are indicated in the PIN creation response, the PIN server indicates a PIN client ID or GPSI of one PINE as the PEGC. In addition, the assigned IP address or port number is passed in the PIN creation response to the PEMC. The PIN server also sends PEGC information regarding access control in the response. The access control information includes: user name, account, service set identifier (Service Set Identifier, SSID) and a basic service set identifier (Basic Service Set Identifier, BSSID). PIN elements in the PIN use all information to access the 5th-Generation (5th-Generation, 5G) communication system or other applications outside the PIN.

The PIN server or the PEMC may determine access control information for some PEGCs.
(1) If the access control information is determined by the PIN server, the PIN server sends the access control information to the PEMC through the PIN creation response. The PEMC delivers the access control information to the PEGC through a PIN creation notification request.
(2) If the access control information is determined by the PEMC, the PEMC delivers the access control information to the PEGC through a PIN creation notification request.

Steps 4a-4c: If the PIN creation response includes a list of PIN elements, the PEMC generates a PIN creation notification request (for example, PIN Creation Notification Request) for each PIN based on the list received in Step 3. The notification request includes a PIN ID of the newly created PIN and an indication making the PIN element become a member of the newly created PIN.

Steps 5a-5c: Each PIN element sends a PIN creation notification response to the PEMC to confirm receipt of the notification. PIN elements receiving a PIN creation notification request with a join indication should not join the PIN by sending a PIN join request, because they are already members of the PIN.

From the above process, the following disadvantages exist in the related art:
(1) If no suitable PINE can act as the PEGC in the PIN, the PIN server may indicate the PEMC as the PEGC. However, the PEGC is a terminal with gateway capability and needs to route data or communication for devices in the PIN, and the PEMC may not have a related PEGC function, leading to devices in the PIN being unable to normally route data or communicate due to absence of a PEGC.
(2) After obtaining the PINE list, the PEMC sends a notification (notification) message to the related PINEs to inform the PINEs that they have joined the PIN. The notification message of the PEMC includes one or more of the following: PIN ID, access control information (access control info), PIN member indication (member indication), PEGC address, and PEGC ID. However, as the PEGC is a terminal with gateway capability in the PIN, it may reject a request of the PEMC. This is because, during PIN creation, the PEGC is selected by the PIN server without agreement between the PEMC and the PEGC. Therefore, if the PEGC rejects the request of the PEMC, devices in the PIN may be unable to normally route data or communicate due to absence of a PEGC.

In the embodiments of this application, the PIN server can obtain first information related to a PEGC, and then determine based on the first information whether there is a PEGC available in a specific PIN. If not, the PIN server can reject a request of creating the PIN, or deactivate the PIN, or create a deactivated PIN, thereby reducing a probability that the PIN cannot normally route data or communication due to the absence of the available PEGC in the PIN.

To understand the information processing method and information transmission method provided in the embodiments of this application, the following terms in the embodiments of this application are explained first:

Application layer support for personal IOT network (Application layer support for Personal IoT Network, PIN APP): is built on a significant increase in the number of consumer IoT devices. Users primarily use these personal IoT devices at home or around their bodies to create a personal IoT network. The application layer support for PIN is used to implement the application layer architecture and related processes for PIN applications on a 3GPP network.

PIN: indicates a personal network composed of Internet of Things (Internet of Things, loT) devices. It includes at least one PEGC, at least one PEMC, and a group of configured and managed PINEs, where the group of PINEs can communicate directly with each other, communicate through a PEGC, or communicate with devices or servers outside the PIN via a PEGC through the 5G network. At least one PEGC is managed by the PEMC. Optionally, if an application function (Application function, AF) is deployed, PIN management can be implemented with support of the AF. In the embodiments of this application, the AF may sometimes be referred to as a PIN server (PIN server).

PINE: is a basic unit in a PIN, which may include UE or a non-3rd Generation Partnership Project (3rd Generation Partnership Project, 3GPP) device. It can communicate within the PIN (via direct PINE-to-PINE connections or indirect PINE-to-PIN connections) or outside the PIN through a PEGC and the 5G Core Network (5G Core Network, 5GC).

PEGC: acts as a gateway in the PIN with communication capability and is capable of helping a PINE route data to another PINE. For example, the PEGC has the capability to provide data network (Data Network, DN) connectivity for other PIN elements through a 5G network and/or provide relay functions for communication between PIN elements. Typically, only UE can act as a PEGC.

PEMC: is an administrator in the PIN and has communication capability to manage authorization and other aspects within the PIN. Optionally, the UE acting as a PIN element can act as both a PEMC and a PEGC.

No PEGC being available in the PIN includes:
(1) during the PIN creation process, a PEGC indicated by the PIN server to the PEMC rejects to act as the PEGC in the PIN created by the PEMC, or the PEGC indicated by the PIN server to the PEMC is unreachable, or there is no PINE that accepts to act as the PEGC in the PIN created by the PEMC; and
(2) the PEMC requesting to create a PIN does not have gateway capability.

There is no PINE that accepts to act as a PEGC in the PIN created by the PEMC, where "accept" can be understood as: support or agree, for example, no PINE in the PIN supports gateway capability, or after a PINE is requested to act as the PEGC in the PIN, the PINE rejects to act as the PEGC in the PIN.

The following specifically describes an information transmission method, an information processing method, an information transmission apparatus, an information processing apparatus, and a related device provided in the embodiments of this application through specific embodiments and application scenarios thereof with reference to the accompanying drawings.

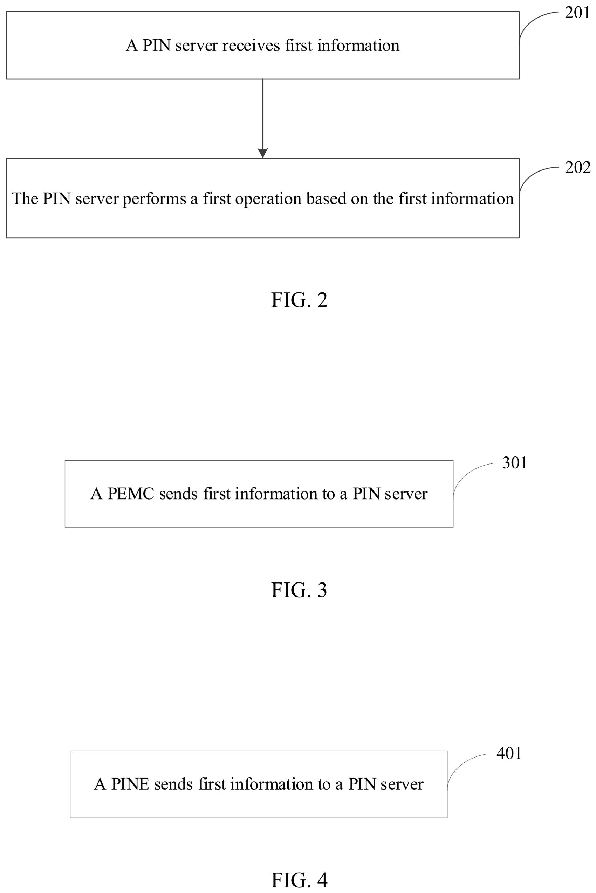

Refer to FIG. 2. For the information processing method provided in this embodiment of this application, the execution subject may be a PIN server. As shown in FIG. 2, the information processing method may include the following steps.

Step 201: A personal IoT network PIN server receives first information, where the first information meets at least one of the following:
the first information is related to a PIN element with gateway capability PEGC; and
the first information includes a first request for requesting creation of a PIN.

In an implementation, the first information may include information related to a PIN element with gateway capability PEGC and a first request.

Optionally, the first request may be a PIN creation request.

In another implementation, the first information includes information related to a PIN element with gateway capability PEGC.

In still another implementation, the first information includes a first request, and the first request carries information related to the PIN element with gateway capability PEGC.

In yet another implementation, the PEMC sends a first request to the PIN server to create a PIN. After receiving the first request, the PIN server obtains the first information by interacting with a PINE in the PIN, and then determines information about the PEGC in the PIN. The first information is related to a PIN element with gateway capability PEGC. In this implementation, the PEMC sending the first request to the PIN server can also be understood as the PEMC triggering the PIN server to obtain information related to the PEGC by sending the first request and then using the PEGC-related information to determine the information about the PEGC in the PIN.

In some implementation, the first information being related to the PIN element with gateway capability PEGC can also be understood as the first information being used to determine the PEGC in the PIN, for example, the first information indicates which PINE(s) accept to act as the PEGC in the PIN.

Step 202: The PIN server performs a first operation based on the first information, where the first operation includes at least one of the following:
determining PEGC information in the PIN;
rejecting the first request;
deactivating the PIN;
updating personal loT network element PINE information of a PEGC in the PIN; and
sending second information to a PIN element with management capability PEMC, where the second information is used to indicate a PINE that accepts to act as a PEGC in the PIN, or the second information indicates accepting the first request.

Optionally, the first information may come from the PEMC or the PINE.

Optionally, the first information may be obtained through multiple steps, for example: first obtaining part of the first information from the PEMC and then obtaining another part of the first information from the PINE; or first obtaining a part of the first information from the PINE and then obtaining another part of the first information from the PEMC. In this case, steps 201 and 202 may be executed alternately, such as performing part of the first operation in step 202 based on a part of the first information, and then performing another part of the first operation in step 202 based on another part of the first information. The execution order of steps 201 and 202 is not limited.

In an implementation, the PEMC may send the first information to the PIN server during the PIN creation process.

In another implementation, the PEMC may send the first information to the PIN server after the PIN is created. For example, during the PIN creation process, some PINEs in the PINE list indicated by the PIN server accept to act as the PEGC in the PIN, while others reject to act as the PEGC in the PIN. In this case, the PEMC may determine the PEGC in the PIN based on the PINEs that accept to act as the PEGC and feed back to the PIN server about the PINEs that reject to act as the PEGC, enabling the PIN server to update PINE information of the PEGC in the PIN accordingly.

In still another implementation, a PINE may send the first information to the PIN server. For example, during the PINE registration process, registration information sent to the PIN server includes whether the PINE has gateway capability or whether it accepts to act as the PEGC in the PIN.

It is worth noting that, in the related art, the PINE registration process is as follows:
1. A PINE (including a PINE, a PEMC, and a PEGC) sends a PINE registration request to the PIN server.

The registration request includes a security credential of the PINE received during the authorization process, and the registration request may also include PINE identification information such as a GPSI, a medium access control (Medium Access Control, MAC) address, a vendor name, a device description, and a PINE address.

If the registration request is triggered by the PEMC, the registration request includes a PIN ID of the PIN for which it intends to register as a PEMC, and the PIN element may indicate whether it is assigned a primary or secondary PEMC role.

2. The PIN server interacts with a 5G system (5G System, 5GS) to check whether a PINE identified by a GPSI has subscribed as a PEMC.

In addition, the PIN server may check whether the PINE identified by the GPSI is already predetermined as the PEMC. If subscribed, the PIN server checks a PIN profile to determine whether a primary or secondary role can be assigned to the requesting PIN element and authorizes the PIN element accordingly. In a case that the PIN has already been created, regardless of the role requested by the PIN element, a secondary PEMC role is assigned to the requesting PIN element.

3. In a success response, the PIN server responds to the PINE with a PINE registration response containing an assigned PIN client ID. If the registration process fails, the PIN server should send a failure response indicating a cause for the failure of the registration request.

It can be seen from the above that in the related art, there is no essential difference between registration of a PEGC and a PINE, meaning that after one PINE with gateway capability registers with the PIN server, the PIN server cannot distinguish whether the PINE has gateway capability.

Through the foregoing implementations of this application, during the registration process to the PIN server, the PEGC may include the first information. For example: in the PINE registration process, registration information sent to the PIN server includes whether the PINE has gateway capability or whether it accepts to act as the PEGC in the PIN. In this way, the PIN server can provide a PINE having gateway capability or accepting to act as the PEGC to the PEMC as the PEGC in the PIN, enabling devices in the PIN to perform normal data routing or communication based on the PEGC.

In an optional implementation, determining the information about the PEGC in the PIN in the first operation may include that: the PIN server may determine, based on the first information, whether there is an available PEGC in the PIN.

In an implementation, if the PIN server determines based on the first information that no PEGCs are available for the PIN, the PIN may reject the first request for requesting creation of the PIN, that is, reject to create the PIN. This can avoid creating a PIN without an available PEGC.

In another implementation, if the PIN server determines, based on the first information, that no PEGCs are available for the PIN, the PIN server may deactivate the PIN, for example, agree to the PEMC creating the PIN and indicate that the created PIN is in a deactivated state, or only agree to the PEMC creating the PIN without indicating an available PEGC for the PIN. In this case, the created PIN is in a deactivated state.

Optionally, after creating a deactivated PIN, if the PIN server obtains an available PEGC for the PIN, it can activate the PIN. For example, if a PINE with gateway capability registers with the PIN server, the PIN server can indicate the PINE as the PEGC in the deactivated PIN and activate the PIN. In this way, in a case that no PEGCs are available for the PIN, a deactivated PIN can be created and activated later when a PEGC is available, which, compared to the previous implementation where PIN creation is rejected due to absence of an available PEGC, reduces the likelihood of repeatedly creating a PIN due to lack of an available PEGC.

It is worth noting that a PIN in a deactivated state is unusable, for example, PINEs in the PIN do not perform data routing or data transmission with each other.

In the related art, the PIN server does not know whether there is an available PEGC in the PIN, leading to creation of an unusable PIN when no PEGC is available. However, in this embodiment of this application, the PIN server can determine whether there is an available PEGC in the PIN, so as to reject creation of the PIN or create a deactivated PIN when there is no available PEGC in the PIN.

In another optional implementation, determining the information about the PEGC in the PIN in the first operation may include that the PIN server may determine, based on the first information, a PEGC available in the PIN.

For example, during the registration process, a PINE sends the first information to the PIN server to indicate whether the PINE has gateway capability, so that the PIN server can determine based on the first information that the PINE with gateway capability can be used as an available PEGC in the PIN.

In this implementation, the PIN server determines an available PEGC in the PIN based on the first information, enabling targeted indication of an available PEGC to the PEMC for the PIN created by the PEMC.

In an optional implementation, sending the second information to the PEMC in the first operation may include:
the PIN server determines, based on the first information, a PINE that accepts to act as the PEGC in the PIN and notifies the PEMC to use the PINE as the PEGC in the PIN.

For example, during the PIN creation process, the PIN server receives the first request from the PEMC and, based on the first request, sends a second request to PINEs in the PIN to request them to act as the PEGC in the PIN. The PINEs then feed back responses to the PIN server, and the PIN server may agree to the first request and notify the PEMC through the second information to indicate a PINE that accept to act as the PEGC as the PEGC in the PIN.

In this implementation, the PIN server requests, based on the first information, PINEs to act as the PEGC in the PIN, enabling targeted indication to the PEMC of a PINE that accept to act as the PEGC in the PIN created by the PEMC.

In an optional implementation, sending the second information to the PEMC in the first operation may include:
the PIN server accepts the first request in a case of determining, based on the first information, that no PEGCs are available for the PIN created by the PEMC.

It should be noted that although the PIN server accepts the first request, only a deactivated PIN can be created because no PEGC is available in the PIN. For example, the second information carries indication information for the deactivated PIN, or the second information carries identification information of the PEMC, where the PEMC does not have gateway capability.

In this implementation, activation of a PIN without an available PEGC can be avoided

In an optional implementation, updating the PINE information of the PEGC in the PIN in the first operation may include:
during the PIN creation process, the PIN server indicates to the PEMC a PINE that can act as the PEGC, but some PINEs refuse to act as the PEGC in the PIN created by the PEMC. In this case, the PEMC may feed back to the PIN server the PINEs that refuse to act as the PEGC in the PIN created by the PEMC, enabling the PIN server to update PINE information of the PEGC in the PIN accordingly, for example, removing the PINEs that refuse to act as the PEGC from the list of PINEs accepting to act as the PEGC in the PIN created by the PEMC.

In an optional implementation, updating the PINE information of the PEGC in the PIN in the first operation may include:
after the PIN is created, the PIN server receives registration information from a PINE, where the registration information can indicate whether the PINE has gateway capability, or accepts to act as the PEGC in the PIN. The PIN server can update PINE information of the PEGC in the PIN based on the PINE with gateway capability or accepting to act as the PEGC in the PIN, for example, adding the PINE with gateway capability or accepting to act as the PEGC in the PIN as the PEGC in the PIN.

In the above implementation, by updating the PINE information of the PEGC in the PIN, available PEGCs in the PIN can be updated in a timely manner, enabling data routing or communication in the PIN based on the available PEGC.

In an optional implementation, that the second information indicates a PINE that accepts to act as a PEGC in the PIN includes at least one of the following:
the second information indicates a PINE acting as a primary PEGC (primary PEGC) in a PIN created by the PEMC; and
the second information indicates a PINE acting as a secondary PEGC (secondary PEGC) in the PIN created by the PEMC.

In this implementation, the PIN server may indicate one primary PEGC to the PEMC, or indicate one primary PEGC and at least one secondary PEGC.

Optionally, the PIN server may indicate one or more PEGCs during the PIN creation process:
(1) If the primary PEGC rejects to act as the PEGC in the PIN or the primary PEGC is unreachable, and there is at least one secondary PEGC that does not reject the PEMC, the PEMC may use the secondary PEGC as the primary PEGC in the PIN.
(2) If the primary PEGC does not reject the request of the PEMC (and is reachable), the PEMC may use the primary PEGC as the primary PEGC in the PIN and ignore PEGCs that reject or are unreachable.

In an implementation, in a case that at least one PEGC can serve the PIN, the PEMC reports information about PEGCs that reject to serve the PIN to the PIN server while ignoring the PEGCs that reject or are unreachable.

In another implementation, in a case that at least one PEGC can serve the PIN, the PIN server may update the PEGC information to the PIN.

In still another implementation, during the PIN creation process, the PIN server determines that a PINE can act as the PEGC in the PIN. However, for some causes, although a PEGC agrees to act as the PEGC, it becomes unreachable when the PEMC sends a PIN notification message. If the primary PEGC is unreachable, the PEMC can use a secondary PEGC as the primary PEGC in the PIN; if a secondary PEGC is unreachable, the PEMC can use the primary PEGC as the primary PEGC in the PIN and ignore the PEGCs that reject or are unreachable.

Optionally, if at least one PEGC is unreachable when the PEMC sends the PIN notification message, the PEMC may also report information about the unreachable PEGC to the PIN server, enabling the PIN server to update the PEGC information in the PIN accordingly.

In an optional implementation, the first information includes at least one of the following:
first identification information, used to identify a PINE that does not accept to act as the PEGC in the PIN;
second identification information, used to identify a PEMC without gateway capability;
first indication information, used to indicate that the PIN is in a deactivated state or to indicate that no PEGCs are available for the PIN;
second indication information, used to indicate that a PINE corresponding to the first identification information does not accept to act as the PEGC in the PIN, or that a PEMC corresponding to the second identification information does not have gateway capability;
third indication information, used to indicate whether a PINE has or does not have gateway capability;
fourth indication information, used to indicate that a PINE accepts or rejects to act as the PEGC in the PIN;
parameter information of a PINE; and
the first request.

In an implementation, the first identification information and the second identification information may be any information that identifies a PINE, such as a PINE ID or a PINE address.

In an implementation, the first information may include the first identification information and the second indication information. In this case, the second indication information explicitly indicates that a PINE corresponding to the first identification information does not accept to act as the PEGC in the PIN or does not have gateway capability.

In another implementation, the first information may include only the first identification information. In this case, the PINE indicated by the first identification information is considered by default as a PINE that does not accept PEGC in the PIN or does not have gateway capability.

In still another implementation, the first information may include the second identification information and the second indication information. In this case, the second indication information explicitly indicates whether a PEMC corresponding to the second identification information has gateway capability. For example, during the PIN creation process, the PEMC sends the second identification information and the second indication information to indicate that the PEMC does not have gateway capability, enabling the PIN server to avoid indicating the PEMC as the PEGC in the PIN created by the PMGC when other PEGCs are available.

In yet another implementation, the first information may include only the second identification information, where the PEMC indicated by the second identification information is considered by default as not having gateway capability.

In still yet another implementation, in a case that the PEMC determines that no PEGCs are available, the PEMC may send the first indication information to the PIN server to indicate that the PIN is in a deactivated state or to indicate that no PEGCs are available for the PIN. For example, during the PIN creation process, the PEMC receives a list of PINEs from the PIN server and sends a third request to these PINEs to request them to act as the PEGC in the PIN. If all the PINEs reject the third request and the PEMC does not have gateway capability, the PEMC may send the first indication information to the PIN server to indicate that the PIN is in a deactivated state or to indicate that no PEGCs are available for the PIN.

In still yet another implementation, a PINE may send third indication information or fourth indication information to the PIN server, for example, including the third indication information or fourth indication information in a PINE registration message. If the third indication information or fourth indication information indicates that the PINE does not have gateway capability or does not accept to act as the PEGC in the PIN, the PIN server may avoid indicating the PEMC to use the PINE as the PEGC in the PIN.

In still yet another implementation, the PINE may send the parameter information of a PINE to the PIN server, for example, a PINE registration message carries the parameter information of the PINE, so that the PIN server can determine, based on the parameter information of the PINE, whether the PINE supports acting as the PEGC in the PIN.

Optionally, the parameter information of the PINE includes at least one of the following:
a MAC address of the PINE;
an Internet Protocol (Internet Protocol, IP) address of the PINE;
a port number of the PINE; and
capability information of the PINE.

In an implementation, based on the MAC address, IP address, or port number of the PINE, it can be determined whether the PINE can provide data routing or communication between PINEs in the PIN, so as to determine whether the PINE supports acting as the PEGC in the PIN.

In another implementation, based on the capability information of the PINE, it can be determined whether the PINE has the capability of acting as a PEGC in a PIN.

Optionally, the capability information of the PINE includes at least one of the following:
a maximum number of PINEs supported when the PINE acts as a PEGC;
a maximum transmission rate supported by the PINE;
a maximum transmission rate supported when the PINE acts as the PEGC; and
a maximum number of PINs supported when the PINE acts as the PEGC.

Based on the capability information, as well as the number of PINEs and service requirements in the corresponding PIN, it can be determined whether the PINE supports acting as the PEGC in the PIN, the number of PEGCs needed in the PIN, and the like.

In an optional implementation, the performing, by the PIN server, a first operation based on the first information includes:
in a case that the PIN server determines based on the first information that no PEGCs are available for the PIN, rejecting the first request, or deactivating the PIN, or accepting the first request.

In an implementation, in a case that the PIN server determines, based on the first information, that no PEGCs are available for the PIN, deactivating the PIN may mean that the PIN server sends an acceptance response to the PEMC, and the acceptance response includes indication information that the PIN is in a deactivated state.

Optionally, the PIN server sends second information to the PEMC, where the second information is used to accept the first request, and the second information includes eighth indication information, the eighth indication information being used to indicate no PEGC being available in the PIN or the PIN being not activated. In this way, the PEMC can determine, based on the second information carrying the eighth indication information, that a deactivated PIN has been created.

In another implementation, in a case that the PIN server determines, based on the first information, that no PEGCs are available for the PIN, accepting the first request may mean that the PIN server sends an acceptance response to the PEMC. In this case, the PEMC determines, based on absence of an available PEGC, that the created PIN is deactivated. For example, in a case of determining that no PINE accepts to act as the PEGC, the PIN server sends an acceptance response to the PEMC, where the acceptance response carries an identifier of the PEMC. In this case, the PEMC determines based on the identifier of the PEMC in the acceptance response whether the PEMC has gateway capability. If not, it is determined that the created PIN is deactivated; if yes, it is determined that the PEMC also acts as the PEGC in the created PIN.

In still another implementation, in a case that the PIN server rejects creation of the PIN or deactivates the PIN, the PIN server may indicate to the PEMC a cause for rejecting the creation of the PIN or deactivating the PIN.

For example, rejecting the first request or deactivating the PIN includes:
sending, by the PIN server, seventh information to the PEMC, where the seventh information is used to indicate a cause of a PIN creation failure or a cause of PIN deactivation.

Optionally, the seventh information is used to indicate at least one of the following:
no PEGC being available; and
the PIN being not activated.

In this implementation, the PEMC can be informed by the seventh information that the cause for the PIN server rejecting the creation of the PIN or deactivating the PIN is absence of an available gateway in the PIN, or directly indicate that the PIN is not activated.

In an optional implementation, in a case that the first information includes the first request from the PEMC, the performing, by the PIN server, a first operation based on the first information includes:
sending, by the PIN server, second information to the PEMC based on the first request, where the second information includes third identification information, and the third identification information is used to identify a PINE indicated by the PIN server to act as a PEGC in the PIN created by the PEMC, or the second information indicates the PEMC to request a PINE identified by the third identification information to act as a PEGC in the PIN created by the PEMC.

Optionally, the third identification information is used to identify at least one of the following:
a PINE acting as a primary PEGC in the PIN created by the PEMC; and
a PINE acting as a secondary PEGC in the PIN created by the PEMC.

In this implementation, during the PIN creation process, the PIN server indicates, to the PEMC, a PINE corresponding to the candidate PEGC. In this case, the PEMC can send a third request to the PINE corresponding to the candidate PEGC to request it to act as the PEGC in the PIN created by the PEMC.

It should be noted that after the PEMC sends the third request to the PINE corresponding to the candidate PEGC, the PINE may accept or reject the third request, where a PINE refusing the third request does not accept to act as the PEGC in the PIN created by the PEMC, and a PINE accepting the third request accepts to act as the PEGC in the PIN created by the PEMC.

Optionally, if all third requests are rejected, that the PIN server receives the first information further includes:
receiving, by the PIN server, third information from the PEMC, where the first information further includes the third information, and the third information is used for requesting to update a PEGC in the PIN created by the PEMC, or indicating that all PINEs corresponding to the third identification information reject to act as a PEGC in the PIN created by the PEMC, or the PEMC does not have gateway capability.

In this implementation, when all third requests are rejected and the PEMC does not have gateway capability, there is no available PEGC in the PIN created by the PEMC. In this case, the PEMC may request the PIN server to update the PEGC in the PIN created by the PEMC.

Optionally, the performing, by the PIN server, a first operation based on the first information further includes at least one of the following:
the PIN server updates, based on the first information, information about a PINE accepting to act as a PEGC in the PIN created by the PEMC;
the PIN server sends, to the PEMC based on the first information, identification information of an updated PINE accepting to act as a PEGC in the PIN created by the PEMC;
the PIN server sends identification information of the PEMC to the PEMC based on the first information to indicate the PEMC to act as a PEGC in the PIN created by the PEMC; and
the PIN server sends a first response to the PEMC based on the first information, where the first response is used for rejecting the first request, or deactivating the PIN created by the PEMC, or receiving the first request.

In an implementation, that the PIN server updates, based on the first information, information about a PINE accepting to act as a PEGC in the PIN created by the PEMC may be: when a PINE capable of acting as the PEGC in the PIN is present in newly registered PINEs, the PIN server adds the PINE to the information about PINEs accepting to act as the PEGC in the PIN created by the PEMC; or, during the PIN creation process, when a PINE rejects to act as the PEGC in the PIN created by the PEMC, the PIN server removes the PINE from the information about PINEs accepting to act as the PEGC in the PIN created by the PEMC.

In an implementation, that the PIN server sends, to the PEMC based on the first information, identification information of an updated PINE accepting to act as a PEGC in the PIN created by the PEMC may be: when a PINE capable of acting as the PEGC in the PIN is present in newly registered PINEs, the PIN server sends identification information of the PINE to the PEMC, enabling the PEMC to indicate the PINE as the PEGC in the PIN; or, during the PIN creation process, if all PINEs indicated by the PIN server as potential PEGCs are unreachable or reject to act as the PEGC in the PIN, the PIN server may update the PEGC information in the PIN and indicate the updated PEGC information to the PEMC.

In an implementation, that the PIN server sends identification information of the PEMC to the PEMC based on the first information to indicate the PEMC to act as a PEGC in the PIN created by the PEMC may be: when the PIN server does not obtain any PINE other than the PEMC that can act as the PEGC in the PIN, the PIN server indicates to the PEMC to make the PEMC act as the PEGC in the PIN.

In an implementation, that the PIN server sends a first response to the PEMC based on the first information, where the first response is used for rejecting the first request, or deactivating the PIN created by the PEMC, or receiving the first request may be: during the PIN creation process, when determining that there is no available PEGC for the PIN requested to be created by the PEMC, the PIN server rejects creation of the PIN, or creates a deactivated PIN, or creates a PIN, which is, however, in a deactivated state due to absence of an available PEGC.

In an optional implementation, the first information further includes fifth indication information, and the fifth indication information is used to indicate that the PIN created by the PEMC is in a deactivated state, or to indicate that there is no PEGC available in the PIN created by the PEMC.

In this implementation, the PEMC may send the fifth indication information to the PIN server when determining that no PEGCs are available for the PIN, for example: when all PEGCs indicated by the PIN server are unreachable or reject to act as the PEGC in the PIN, and the PEMC does not have gateway capability, so as to indicate that the PIN created by the PEMC is in a deactivated state or that no PEGCs are available for the PIN created by the PEMC. Based on the fifth indication information, the PIN server may update the PEGC in the PIN or create a deactivated PIN.

In an optional implementation, the receiving, by a PIN server, first information includes:
receiving, by the PIN server, registration information from a PINE, where the first information includes the registration information, and the registration information includes indication information for indicating whether the PINE has gateway capability or whether the PINE accepts to act as a PEGC in the PIN.

In this implementation, during the registration process, a PINE reports indication information of whether the PINE has or does not have gateway capability, or whether the PINE accepts or does not accept to act as the PEGC in the PIN, enabling the PIN server to determine based on the registration information whether it supports acting as the PEGC in the PIN.

In an optional implementation, the performing, by the PIN server, a first operation based on the first information includes at least one of the following:
determining, by the PIN server based on the registration information, a PINE accepting to act as a PEGC in the PIN;
in a case that the PIN server determines, based on the registration information, that the PINE accepting to act as the PEGC in the PIN changes, sending, by the PIN server, fourth information to the PEMC of the PIN, or determining that no PEGCs are available for the PIN, where the fourth information indicates a changed-to PINE accepting to act as the PEGC in the PIN;
in a case that the first request is received from the PEMC, if it is determined that there is a target PINE in registered PINEs that accepts to act as a PEGC in the PIN created by the PEMC, sending, by the PIN server, sixth indication information to the PEMC, where the sixth indication information indicates that the PEMC requests the target PINE to act as a PEGC in the PIN created by the PEMC; or
in a case that the first request is received from the PEMC, if it is determined that there is no target PINE in registered PINEs that accepts to act as a PEGC in the PIN created by the PEMC, sending, by the PIN server, seventh indication information to the PEMC, where the seventh indication information indicates the PEMC to act as a PEGC in the PIN created by the PEMC, or indicates that the PIN created by the PEMC is in a deactivated state, or rejects to create the PIN by the PEMC.

Optionally, the fourth information includes at least one of the following:
identification information of the changed-to PINE accepting to act as the PEGC in the PIN;
a modification type (Modification type);
identification information of the PIN (PIN ID);
a PIN profile information (PIN profile information); and
dynamic PIN profile information (Dynamic PIN profile information).

In an implementation, after the PIN is created, if a newly registered PINE accepts to act as the PEGC in the PIN, the PIN server may send the PINE to the PEMC, enabling the PEMC to indicate the PINE as the PEGC in the PIN.

In another implementation, after the PIN is created, if a PINE is unreachable or modifies its registration information to indicate not accepting to act as the PEGC in the PIN, the PIN server may determine that the PINE has changed to not accepting to act as the PEGC in the PIN. If all PEGCs in the PIN change to not accepting to act as the PEGC, the PIN server may indicate to the PEMC that no PEGCs are available for the PIN.

In an implementation, during the PIN creation process, the PIN server may determine, based on registration information of registered PINEs, a target PINE that accepts to act as the PEGC in the PIN requested to be created by the PEMC, and send sixth indication information to the PEMC to indicate the PEMC to request the target PINE to act as the PEGC in the PIN created by the PEMC.

In an implementation, during the PIN creation process, if the PIN server determines, based on registration information of registered PINEs, that no target PINE accepts to act as the PEGC in the PIN requested to be created by the PEMC, the PIN server may send seventh indication information to the PEMC to indicate the PEMC to act as the PEGC in the PIN created by the PEMC, or indicate that the PIN created by the PEMC is in a deactivated state, or to reject creation of the PIN by the PEMC.

It should be noted that, in a case that the seventh indication information indicates the PEMC to act as the PEGC in the PIN created by the PEMC, if the PEMC has gateway capability, the PEMC acts as the PEGC in the created PIN; or if the PEMC does not have gateway capability, the PIN created by the PEMC may be in a deactivated state.

In an optional implementation, in a case that the first information includes the first request from the PEMC, the performing, by the PIN server, a first operation based on the first information includes:
sending, by the PIN server, a second request to a first PINE, where the second request is used to request the first PINE to act as a PEGC in the PIN created by the PEMC; and
the receiving, by a PIN server, first information includes:
   receiving, by the PIN server, a second response from the first PINE, where the second response carries the first information, and the first information indicates that the first PINE accepts or rejects to act as a PEGC in the PIN created by the PEMC.

In this implementation, during the PIN creation process, the PIN server requests a first PINE to act as the PEGC in the PIN requested to be created by the PEMC. In this case, the first PINE may feed back an acceptance response or a rejection response to the PIN server. Based on the response, the PIN server may determine the PEGC in the PIN based on the response, or determine whether there is an available PEGC in the PIN, or determine to reject or accept the first request, or determine whether the created PIN is in an activated state or a deactivated state.

Optionally, the performing, by the PIN server, a first operation based on the first information further includes at least one of the following:
the PIN server updates, based on the second response, information of PINEs accepting to act as the PEGC in the PIN created by the PEMC, for example: indicating the first PINE sending an acceptance response as the updated PINE accepting to act as the PEGC in the PIN created by the PEMC; and
the PIN server sends identification information of a target first PINE to the PEMC based on the second response, where the target first PINE is a first PINE that accepts to act as a PEGC in the PIN created by the PEMC; for example, second information is sent to the PEMC, and the second information carries identification information of the first PINE sending the acceptance response;
the PIN server sends identification information of the PEMC to the PEMC based on the second response to indicate the PEMC to act as a PEGC in the PIN created by the PEMC; for example, in a case that all first PINEs send rejection responses, the PIN server sends second information to the PEMC, the second information carrying identification information of the PEMC; and
the PIN server sends a first response to the PEMC based on the second response, where the first response is used to respond to the first request; for example, in a case that all first PINEs send rejection responses, the first request is rejected or the PIN requested to be created through the first request is deactivated.

Optionally, after the sending, by the PIN server, identification information of the PEMC to the PEMC based on the first response to indicate the PEMC to act as a PEGC in the PIN created by the PEMC, the performing, by the PIN server, a first operation based on the first information further includes:
receiving, by the PIN server, fifth information from the PEMC, where the fifth information indicates that the PEMC accepts or does not accept to act as a PEGC in the PIN created by the PEMC, or that the PEMC has or does not have gateway capability.

In this implementation, in a case of determining, based on the first response, that all first PINEs reject to act as the PEGC in the PIN created by the PEMC, the PIN server may send identification information of the PEMC to the PEMC to indicate the PEMC to act as the PEGC in the PIN created by the PEMC. In this case, if the PEMC does not have gateway capability, the PEMC may feed back, to the PIN server, fifth information that the PEMC does not accept to act as the PEGC in the PIN created by the PEMC or does not have gateway capability.

In an implementation, the PIN server may determine based on the first response and the fifth information whether an PEGC is available in the PIN.

Optionally, in a case that the PIN server determines that there is no PEGC available in the PIN created by the PEMC, the first response is used to reject the first request, or to deactivate the PIN created by the PEMC, or to accept the first request.

It is worth noting that, in a case that the PIN server determines that no PEGCs are available for the PIN created by the PEMC, the first response being used to accept the first request may mean that, although the PIN server agrees to create the PIN, the PIN is in a deactivated or in other unavailable states due to absence of an available PEGC.

In an optional implementation, the first information further includes PEMC related information or PIN related information; and
the first operation further includes:
updating sixth information, where the sixth information includes at least one of the following:
PEMC information; and
PIN profile information.

In this implementation, in addition to the PEGC in the PIN, other information in the PIN, such as PEMC information or PIN profile information, can be updated based on the first information. For example, when the PEMC is unreachable, the PEMC in the PIN is updated.

In the embodiments of this application, the PIN server can obtain first information related to a PEGC, and then determine based on the first information whether there is a PEGC available in a specific PIN. If not, the PIN server can reject a request of creating the PIN, or deactivate the PIN, or create the deactivated PIN; or if yes, the PIN server can indicate a PEGC for the PIN in a targeted manner. Alternatively, the PIN server can update, based on the first information, information about a PINE supporting to act as a PEGC in the PIN, so that the PEMC can determine an available PEGC based on the updated information about the PINE supporting to act as a PEGC in the PIN. This can reduce a probability that the devices in the PIN cannot normally route data or communication due to no PEGC.

Refer to FIG. 3. FIG. 3 is a flowchart of an information transmission method according to an embodiment of this application. The execution subject of the information transmission method may be a PEMC. As shown in FIG. 3, the method may include the following step.

Step 301: The PEMC sends first information to a PIN server.

The first information includes at least one of the following:
first identification information, used to identify a PINE that does not accept to act as the PEGC in the PIN;
second identification information, used to identify the PEMC, where the PEMC has no gateway capability;
first indication information, used to indicate that a PIN created by the PEMC is in a deactivated state or indicate that no PEGCs are available for the PIN;
second indication information, used to indicate that a PINE corresponding to the first identification information does not accept to act as the PEGC in the PIN, or that a PEMC corresponding to the second identification information does not have gateway capability; and
a first request, where the first request is used to request creation of a PIN.

It should be noted that contents of the first information in this embodiment of this application have the same meaning and function as corresponding contents of the first information in the method embodiment shown in FIG. 2. For details, refer to descriptions in FIG. 2; details are not repeated herein. In addition, the PEMC can provide the PIN server with the first information for assisting in determining the PEGC in the PIN. For example, whether an PEGC is available in the PIN, which PEGCs do not accept to act as the PEGC in the PIN, whether the PEMC can be used as the PEGC in the PIN, and how to handle cases where there is no PINE in the PIN that accepts to act as the PEGC, such as deactivating the PIN, rejecting creation of the PIN, or updating the PEGC in the PIN. Similar beneficial effects as those in the method embodiment shown in FIG. 2 can be achieved. To avoid repetition, details are not described herein again.

Optionally, the method further includes:
receiving, by the PEMC, second information from the PIN server, where the second information is used to indicate a second PINE that accepts to act as a PEGC in the PIN created by the PEMC, or the second information indicates accepting the first request; and
determining, by the PEMC based on the second information, a PEGC in a PIN created by the PEMC, or creating a deactivated PIN.

In an implementation, the second PINE may be determined by the PIN server sending a second request, that is, during the PIN creation process, the PIN server sends a second request to a PINE to request the PINE to act as the PEGC in the PIN. The PINE may feed back an acceptance response or a rejection response to the PIN server, and the PIN server then indicates a PINE corresponding to the acceptance response to be the second PINE.

In another implementation, the second PINE may include a PINE determined by the PIN server based on registration information as supporting to act as the PEGC in the PIN.

In still another implementation, the second PINE may include any PINE in the PIN, such as all or part of the PINEs.

In yet another implementation, during the PIN registration process, the PIN server may first update registration information of PINEs to select a first PINE that supports acting as the PEGC in the PIN; during the PIN creation process, request the first PINE to act as the PEGC in the created PIN; and then indicate a first PINE that sends an acceptance response as the second PINE.

After receiving the second information indicating the second PINE, the PEMC may directly use the second PINE as the PEGC in the created PIN; or request the second PINE to act as the PEGC in the PIN created by the PEMC.

In an optional implementation, the method further includes:
sending, by the PEMC, a third request to a second PINE, where the third request is used to request the second PINE to act as a PEGC in the PIN created by the PEMC.

In an implementation, the method further includes:
receiving, by the PEMC, a third response from the second PINE, where the third response is used to indicate that the second PINE accepts or rejects to act as a PEGC in the PIN.

In another implementation, the PEMC receives a third response from the second PINE that accepts to act as the PEGC in the PIN. In this case, the PEMC by default considers the second PINE from which no third response is received as rejecting to act as the PEGC in the PIN.

In this implementation, during the PIN creation process, the PIN server indicates to the PEMC a second PINE that can act as the PEGC in the created PIN, and the PEMC requests the second PINE to act as the PEGC in the created PIN. During this process, the second PINE may reject or accept to act as the PEGC, or the second PINE may be unreachable.

Optionally, in a case that a second PINE rejects to act as the PEGC in the PIN created by the PEMC, the first information is further used to request to update the PEGC in the PIN created by the PEMC, or to indicate that all second PINEs reject to act as a PEGC in the PIN created by the PEMC.

In this implementation, the PEGC information in the PIN can be updated in a timely manner to avoid designating one rejecting to act as the PEGC in the PIN created by the PEMC as the PEGC in subsequent PIN creation processes.

In an optional implementation, the second PINE includes:
a PINE acting as a primary PEGC in the PIN created by the PEMC; and
a PINE acting as a secondary PEGC in the PIN created by the PEMC.

Optionally, the determining, by the PEMC based on the second information, a PEGC in a PIN created by the PEMC includes at least one of the following:
in a case that the primary PEGC is unreachable or rejects to act as the PEGC in the PIN created by the PEMC, and at least one secondary PEGC does not reject to act as the PEGC in the PIN created by the PEMC, using, by the PEMC, a secondary PEGC as the primary PEGC in the PIN created by the PEMC;
in a case that the primary PEGC is reachable and does not reject to act as the PEGC in the PIN created by the PEMC, using, by the PEMC, a primary PEGC as the primary PEGC in the PIN created by the PEMC; and
in a case that the primary PEGC is reachable and does not reject to act as the PEGC in the PIN created by the PEMC, ignoring, by the PEMC, a target PEGC, where the target PEGC is unreachable or rejects to act as the PEGC in the PIN created by the PEMC.

In this implementation, during the PIN creation process, if the PIN server indicates a primary PEGC and at least one secondary PEGC, the PEMC preferentially uses the primary PEGC as the PEGC in the PIN created by the PEMC. When the primary PEGC is unreachable or rejects to act as the PEGC in the PIN created by the PEMC, the PEMC may use a secondary PEGC that does not reject to act as the PEGC in the PIN created by the PEMC as the primary PEGC in the PIN created by the PEMC.

In an optional implementation, the creating, by the PEMC, a deactivated PIN based on the second information includes:
in a case that the second information is used to accept the first request, if the second information includes eighth indication information and the eighth indication information indicates that no PEGCs are available for the PIN or the PIN is not activated, creating, by the PEMC, the deactivated PIN.

In this implementation, in a case that no PEGCs are available for the PIN, if the PIN server accepts creation of the PIN, the PIN server may send the second information carrying the eighth indication information to the PEMC to indicate accepting creation of the PIN but no available PEGC existing in the PIN or the PIN being in a deactivated state. In this way, the PEMC can determine, based on the eighth indication information, that a PIN without an available PEGC or a deactivated PIN has been created. Subsequently, the PEMC can manage PINEs in the PIN without an available PEGC or in a deactivated state not to perform data routing.

In an optional implementation, the method further includes:
receiving, by the PEMC, seventh information from the PIN server, where the seventh information is used to indicate a cause of a PIN creation failure or a cause of PIN deactivation.

Optionally, the seventh information is used to indicate at least one of the following:
no PEGC being available; and
the PIN being not activated.

In this implementation, in a case that no PEGCs are available for the PIN, if the PIN server rejects creation of the PIN or determines to deactivate the PIN, the PIN server may use the seventh information to inform the PEMC of a cause for rejecting creation of the PIN or deactivating the PIN. Subsequently, based on the cause for the PIN server rejecting the creation of the PIN or deactivating the PIN, the PEMC may take actions such as requesting to update the PEGC or adding a PINE with management capability to the PIN to re-request creation of the PIN or activate the PIN.

In an optional implementation, the method further includes:
sending, by the PEMC, ninth indication information to a PINE in the PIN based on the seventh information or the eighth indication information, where the ninth indication information is used to indicate at least one of the following: no PEGC is available in the PIN, no gateways are available for the PIN, and the PIN is not activated.

In this implementation, when the PEMC learns that no PEGCs are available for the PIN, the PEMC may send notification information to PINEs in the PIN to synchronize, with the PINEs in the PIN, a state of no available PEGC or the PIN being not activated. This prevents PINEs from sending data to the PEMC in absence of a gateway in the PIN, avoiding waste of signaling and resources.

In this embodiment of this application, the information transmission method executed by the PEMC corresponds to the information processing method executed by the PIN server in the method embodiment shown in FIG. 2, and can achieve similar beneficial effects as the method embodiment shown in FIG. 2. To avoid repetition, details are not described herein again.

Refer to FIG. 4. FIG. 4 is a flowchart of another information transmission method according to an embodiment of this application. The execution subject of the information transmission method may be a PINE. As shown in FIG. 4, the method may include the following step.

Step 401: The PINE sends first information to a PIN server.
the first information includes at least one of the following:
third indication information, used to indicate whether the PINE has or does not have gateway capability;
fourth indication information, used to indicate that the PINE accepts or rejects to act as a PEGC in a PIN; and
parameter information of the PINE.

It should be noted that contents of the first information in this embodiment of this application have the same meaning and function as corresponding contents of the first information in the method embodiment shown in FIG. 2. For details, refer to descriptions in FIG. 2; details are not repeated herein. In addition, the PINE can provide the PIN server with the first information for assisting in determining the PEGC in the PIN. For example, whether an PEGC is available in the PIN, which PEGCs do not accept to act as the PEGC in the PIN, whether the PEMC can be used as the PEGC in the PIN, and how to handle cases where there is no PINE in the PIN that accepts to act as the PEGC, such as deactivating the PIN, rejecting creation of the PIN, or updating the PEGC in the PIN. Similar beneficial effects as those in the method embodiment shown in FIG. 2 can be achieved. To avoid repetition, details are not described herein again.

Optionally, the parameter information of the PINE includes at least one of the following:
a media access control MAC address of the PINE;
an Internet protocol IP address of the PINE;
a port number of the PINE; and
capability information of the PINE.

Optionally, the capability information of the PINE includes at least one of the following:
a maximum number of PINEs supported when the PINE acts as a PEGC;
a maximum transmission rate supported by the PINE;
a maximum transmission rate supported when the PINE acts as the PEGC; and
a maximum number of PINs supported when the PINE acts as the PEGC.

In a first implementation, that the PINE sends the first information to the PIN server includes:
sending, by the PINE, registration information to the PIN server, where the first information includes the registration information, and the registration information is used to indicate whether the PINE has or does not have gateway capability or indicate whether the PINE accepts or does not accept to act as the PEGC in the PIN.

In a second implementation, before the PINE sends the first information to the PIN server, the method further includes:
receiving, by the PINE, a second request from the PIN server, where the second request is used to request the PINE to act as a PEGC in the PIN; and
the sending, by a PINE, first information to a PIN server includes:
   sending, by the PINE, a second response to the PIN server, where the second response carries the first information and the first information indicates that the PINE accepts or rejects to act as a PEGC in the PIN.

In a third implementation, the method further includes:
receiving, by the PINE, a third request from the PEMC, where the third request is used to request the PINE to act as a PEGC in the PIN created by the PEMC; and
sending, by the PINE, a third response to the PEMC, where the third response is used to indicate that the PINE accepts or rejects to act as a PEGC in the PIN.

It should be noted that a final PEGC in PIN can be determined based on at least one of the above three implementations.

For example, it can be determined based on the registration information and the second request from the PIN server, or based on the registration information and the third request from the PEMC, or based on the second request from the PIN server and the third request from the PEMC, or based on the registration information, the second request from the PIN server, and the third request from the PEMC.

In this embodiment of this application, the information transmission method executed by the PINE corresponds to the information processing method executed by the PIN server in the method embodiment shown in FIG. 2, and can achieve similar beneficial effects as the method embodiment shown in FIG. 2. To avoid repetition, details are not described herein again.

To facilitate understanding of the information processing method and the information transmission method provided by the embodiments of this application, the following four implementations are used as examples to illustrate the interactions between the PIN server, the PEMC, and the PINE:

Embodiment 1: After PIN creation, the PEMC synchronizes information about PINEs that cannot act as the PEGC to the PIN server.

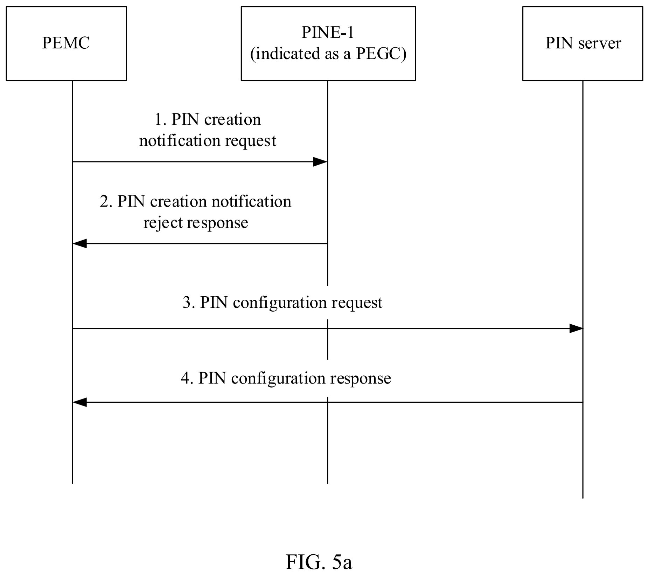

As shown in FIG. 5a, interaction between the PIN server, PEMC, and PINE includes the following steps:
Step 1: After the PIN is created, the PEMC sends a third request (for example, PIN Creation Notification Request) to a PEGC indicated by the PIN server, with the purpose including: (1) notifying the PEGC that it has been added to the PIN; (2) indicating that PINE-1 is the PEGC in the PIN.

Step 2: PINE-1, due to device reasons or capability reasons (for example, being set by a user, or the maximum number of supported PINs being reached), cannot act as the PEGC in the PIN indicated by the PEMC. Therefore, PINE-1 sends a third response (for example, PIN Creation Notification Reject (PIN creation notification reject)) to the PEMC.

It should be noted that steps 1 and 2 are optional steps. For example, if no suitable PEGC is available, the PIN server may indicate the PEMC as the PEGC in the PIN, in which case there will be no interaction of steps 1 and 2 for the PEMC.

Step 3: The PEMC sends third information to the PIN server (assuming a message carrying the third information is a first request message), where the third information is used to request the PIN server to update the PEGC in the PIN.

For example, after the PEMC receives the PIN Creation Notification Reject message sent by PINE-1; or after the PEMC receives from the PIN server an indication of acting as the PEGC in the PIN and determines that it cannot act as the PEGC, the PEMC requests the PIN server to update the PEGC in the PIN.

Optionally, the first request message carrying the third information may specifically be a PIN configuration request (PIN configuration request) message or a PIN Creation Notification Request message.

It should be noted that, in the related art, the PIN Creation Notification Request is only used by the PEMC to notify the PEGC that the PEGC has been added to the PIN or to indicate that PINE-1 is the PEGC in the PIN. In this embodiment of this application, the PIN Creation Notification Request can be reused to request the PIN server to update the PEGC in the PIN.

Optionally, the first request message includes first indication information indicating that the PIN is in a deactivated state, or indicating that no PEGCs are available for the PIN. The PIN being in a deactivated state means that, although the PIN has been successfully created, it cannot be successfully enabled, where a cause is that no PEGCs are available for the PIN.

In some implementations, the first request message is a PIN Creation Notification Request message. An identifier of the PEGC is set to:
(a) a PINE-1 ID (that is, a PINE that sends a PIN Creation Notification Reject message and rejects to act as the PEGC); or
(b) a PEMC ID (that is, a PEMC that is indicated to act as the PEGC but does not have related PEGC capability).

A PEGC address is set to:
(a) PINE-1 address information (that is, a PINE that sends a PIN Creation Notification Reject message and rejects to act as the PEGC); or
(b) PEMC address information (that is, a PEMC that is indicated to act as the PEGC but does not have related PEGC capability).

The format and content of the PIN creation notification request message are shown in the following table 1.

**Table 1**

| Information element | Status | Description |
|---|---|---|
| PIN ID | M | Identifier of a newly created PIN |
| Indication | O | Indicates that a PINE has become a member of the newly created PIN. |
| > PEGC identifier | O | Indicates an identifier of a PINE acting as the PEGC in the PIN. |
| > > **PEGC** address | O | Specified IP address or port number of the PEGC |
| > PEGC information | O | Includes, for example, PEGC information. |
| > > Access control information | O | Includes: user name, account, SSID, and BSSID. PIN elements in the PIN use all information to access 5G or other applications outside the PIN. |

In some implementations, the first request message is a PIN configuration request message.
(1) Authorization type (Authorization type) is set to PEGC role change (role change); and
(2) PINE ID of predecessor in the role (PINE ID of predecessor in the role) (PINE ID) is set to:
   (a) a PINE-1 ID (that is, a PINE that sends a PIN Creation Notification Reject message and rejects to act as the PEGC); and/or
   (b) a PEMC ID (that is, a PEMC that is indicated to act as the PEGC but does not have related PEGC capability).

When both (a) and (b) are included, PINE ID of predecessor in the role can be understood as a list containing at least one piece of ID information.

The format and content of the PIN creation notification request message are shown in the following table 2.

**Table 2**

| Information element | Status | Description |
|---|---|---|
| PIN ID | M | Identifier of a PIN |
| Requester PINE ID | M | Identifier of a PINE making the request. |
| Authorization type | M | Authorization for requesting PIN configuration modification: PEMC role change, PEGC role change |
| PINE ID | M | PINE ID of an element serving an indicated role and needing to be changed, for example, due to unavailability |
| Proposed PINE ID | O | PINE ID of the element proposed to serve the role |

Step 4: The PIN server receives the first request message sent by the PEMC.

Optionally, the first request message is a PIN configuration request message or a PIN creation notification request message.

In some implementations, the first request message is a PIN creation notification request message. After receiving the PIN creation notification request message sent by the PEMC, the PIN server performs at least one of the following:
(1) Consider PINEs identified by identifiers of PEGCs in the PIN creation notification request message as PINEs that cannot act as the PEGC in the PIN.
(2) Based on PEGC information sent by the PIN server to the PEMC during the PIN creation process, perform at least one of the following:
   (a) update PEGC information in the PIN, where the PIN is identified by a PIN ID; and
   (b) send a PIN creation notification response (PIN creation notification response) message to the PEMC, where the PIN creation notification response message includes PEGC information in the PIN updated by the PIN server. When no PINE other than the PEMC can act as the PEGC, the updated PEGC information in the PIN is set to information about the PEMC. In this case, the PIN server determines that no PEGCs are available for the PIN.

In some implementations, the first request message is a PIN configuration request message. After receiving the PIN configuration request message sent by the PEMC, the PIN server performs at least one of the following:
(1) Consider a PINE identified by PINE ID of predecessor in the role in the PIN configuration request message as a PINE that cannot act as the PEGC in the PIN.
(2) Based on PEGC information sent by the PIN server to the PEMC during the PIN creation process, perform at least one of the following:
   (a) update PEGC information in the PIN, where the PIN is identified by a PIN ID; and
   (b) send a PIN configuration response (PIN configuration response) message to the PEMC, where the PIN configuration response message includes the PEGC information in the PIN updated by the PIN server. When no PINE other than the PEMC can act as the PEGC, the updated PEGC information in the PIN is set to information about the PEMC. In this case, the PIN server determines that no PEGCs are available for the PIN.

After receiving the PIN configuration response message, the PEMC performs at least one of the following:
(1) Update the PEGC information in the PIN based on the PEGC information in the PIN updated by the PIN server.
(2) If the PEGC information in the PIN updated by the PIN server is PEMC information:
   (a) the PIN configuration request message sent by the PEMC meets the following conditions:
      (i) authorization type is set to PEGC role change; and
      (ii) PINE ID of predecessor in the role (PINE ID of predecessor in the PEGC role) includes PEMC ID;
      then, the PEMC considers that the PIN server has determined that no PEGCs are available for the PIN; or
   (b) in a case that condition (i) is satisfied, only condition (ii) is satisfied, or neither condition (i) nor (ii) is satisfied, the PEMC needs to confirm whether the PEMC itself can act as the PEGC. If the PEMC cannot act as the PEGC, step 3 in this embodiment is performed, that is, the PEMC meets the conditions (2)-(b) of step 3: the PEMC receives from the PIN server an indication of acting as the PEGC in the PIN, and the PEMC determines that the PEMC itself cannot act as the PEGC.

Embodiment 2: After the PIN is created, the PIN server triggers an update of the PEGC in the PIN to the PEMC.

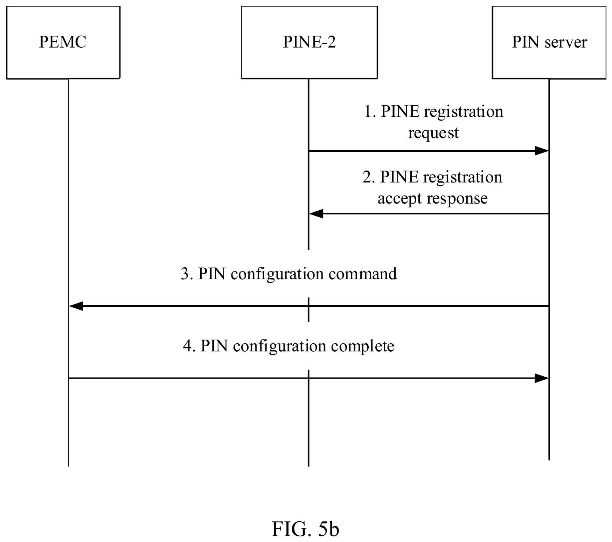

As shown in FIG. 5b, interaction between the PIN server, PEMC, and PINE includes the following steps:
Step 1: PINE-2 sends registration information (for example, PINE registration request) to the PIN server to register with the PIN server. The PINE registration request message includes indication information, where the indication information is used to indicate at least one of the following: PINE-2 has gateway capability; and PINE-2 can act as the gateway in the PIN.

Optionally, the PINE registration request further includes a MAC address, an IP address, a port number, and capability information. Optionally, the capability information can also be referred to as performance information, such as a maximum number of PINEs supported by the gateway, a maximum supported rate, and a maximum number of PINs supported.

Step 2: The PIN server sends to PINE-2 a PINE registration acceptance message, which is used to confirm successful registration of PINE-2 in the PIN server. It should be noted that step 2, as an independent process related to step 1, can alternatively be executed after step 3 or step 4, and the execution order of step 1, step 2, step 3 and step 4 is not limited here.

Step 3: When at least one of the following is satisfied:
(1) the PEGC information in the PIN changes; and
(2) the PIN server determines that no PEGCs are available for the PIN;
then, the PIN server sends fourth information (assumed that the fourth information is carried in a second request message) to the PEMC, the second request message being used to update the PEGC information in the PIN.

Optionally, the second request message includes at least one of the following: PIN ID; modification type (Modification type); PINE ID of predecessor in the role; PIN profile information (PIN profile information); and dynamic PIN profile information (Dynamic PIN profile information).

For example, the second request message may be a PIN configuration command (PIN configuration command), and its contents are shown in the following table 3.

**Table 3**

| Information element | Status | Description |
|---|---|---|
| PIN ID | M | Identifier of a PIN |
| Modification type | M | Request to modify the PIN: PEMC update and PEGC update. |
| PINE ID | M | PINE ID of an element in the indicated modification type, requiring an update |
| PIN profile information | O | Information element (Information Element, IE) in the PIN profile information, which has been updated by the PIN server to modify the PIN. |
| Dynamic PIN profile information | O | IE in the dynamic PIN profile information authorized by the PIN server to modify the PIN. |

Step 4: The PEMC responds to the second request message described in Step 3, indicating an execution result of Step 3.

For example, the PEMC may use a PIN configuration complete (PIN configuration complete) to respond to the second request message. For example, the PIN configuration complete message includes at least one of the following: PIN ID; result (Result) information, used to indicate a result of the second request message; cause value (cause), used to indicate a cause for failure; and PINE ID of failure (PINE ID of failure), used to indicate a PINE ID for an execution failure.

For example, contents carried by a PIN configuration complete message are in the following table 4.

**Table 4**

| Information element | Status | Description |
|---|---|---|
| PIN ID | M | Identifier of a PIN |
| Result | M | Indicates whether the PIN configuration command is "successful" or "failed". |
| > Cause value | O | If the result is "failed", the PEMC indicates a cause for the PIN configuration failure, for example, a failure in indicating a PINE as the PEMC, or a failure in indicating a PINE as the PEGC. |
| > PINE **ID** of failure | O | If the result is "failed", the PEMC indicates a PINE ID for the PIN configuration failure. |

Embodiment 3: During PIN creation, the PIN server confirms the PEGC role.

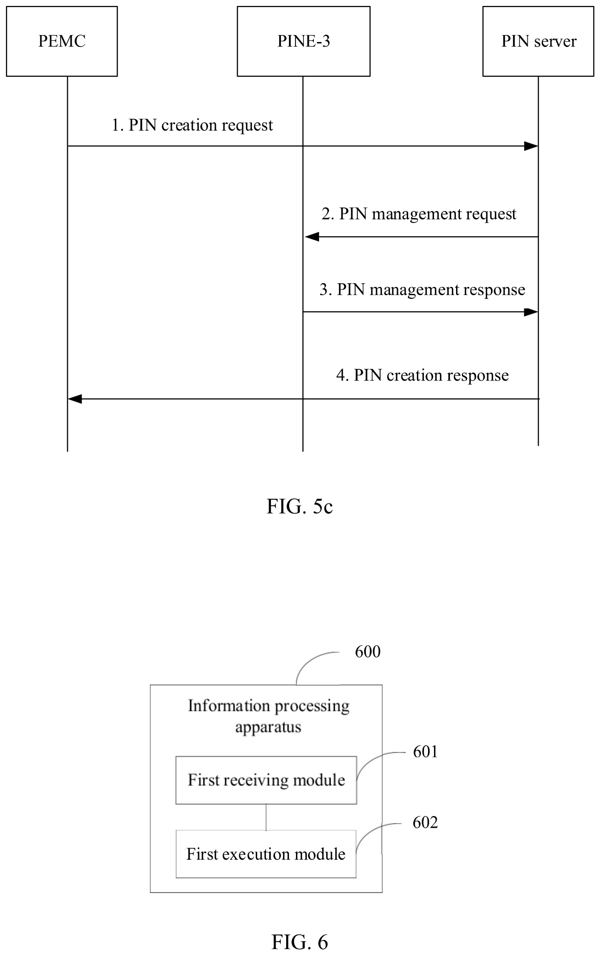

As shown in FIG. 5c, interaction between the PIN server, PEMC, and PINE includes the following steps:
Step 1: The PEMC sends a PIN creation request to the PIN server to create one PIN.

Step 2: After receiving the PIN creation request sent by the PEMC, the PIN server performs at least one of the following:
(1) determine a PINE (excluding the PEMC) that can act as the PEGC in the PIN, such as PINE-3; and
(2) send a second request (assumed to be carried in a third request message) to PINE-3, where the third request message is used to determine whether PINE-3 can act as the PEGC in the PIN. If at least one PINE can act as the PEGC in the PIN, the third request message is sent to those PINEs. In some implementations, the third request message may be a PIN management request (PIN management request) message.

Step 3: After receiving the third request message sent by the PIN server, the PINE determines whether it can act as the PEGC in the PIN, and sends a message to respond to the third request message. For example, a second response (such as a PIN management response (PIN management response) message) is used to respond to the third request message.

Step 4: The PIN server receives the response message of the PINE in step 3, and based on the response message, the PIN server performs at least one of the following:
(1) update information about the PINE acting as the PEGC in the PIN; and
(2) based on the updated PEGC information, send a PIN creation response message to the PEMC, which is used to respond to the PIN creation request message sent by PEMC in step 1 (that is, using the PIN creation response message in the related art).

It should be noted that, in some implementations, if no other PINEs than the PEMC can act as the PEGC in the PIN, the PIN server rejects the PIN creation request of the PEMC, or responds to the PIN creation request of the PEMC, where the response message carries indication information and the indication information indicates that the PIN is in an inactive state, or indicates that no PEGCs are available for the PIN.

Embodiment 4: During the PIN creation process, the PIN server indicates multiple PEGCs, and only some PEGCs reject the request of the PEMC.

In this implementation, the PIN server may indicate one or more PEGCs during the PIN creation process, including a primary PEGC (primary PEGC) and one or more secondary PEGCs (secondary PEGCs).
(1) If the primary PEGC rejects to act as the PEGC in the PIN or the primary PEGC is unreachable, and there is at least one secondary PEGC that does not reject the PEMC, the PEMC may use the secondary PEGC as the primary PEGC in the PIN.
(2) If the primary PEGC does not reject the request of the PEMC (and is reachable), the PEMC may use the primary PEGC as the primary PEGC in the PIN and ignore PEGCs that reject or are unreachable.

It should be noted that Embodiment 4 can be used in combination with Embodiment 1 shown in FIG. 5a. For example, in a case that at least one PEGC can serve the PIN, the PEMC may also use Embodiment 1, reporting information about PEGCs incapable of serving the PIN to the PIN server while ignoring the PEGCs that reject or are unreachable.

Embodiment 4 can be used in combination with Embodiment 2 shown in FIG. 5b. For example, in a case that at least one PEGC can serve the PIN, the PIN server may update the PEGC information to the PIN.

Embodiment 4 can be used in combination with Embodiment 3 shown in FIG. 5c. For example, during the PIN creation process, the PIN server determines that a PINE can act as the PEGC in the PIN. However, for some causes, although a PEGC agrees to act as the PEGC, it becomes unreachable when the PEMC sends a PIN notification message. If the primary PEGC is unreachable, the PEMC can use a secondary PEGC as the primary PEGC in the PIN; if a secondary PEGC is unreachable, the PEMC can use the primary PEGC as the primary PEGC in the PIN and ignore the PEGCs that reject or are unreachable.

Embodiment 4 can be used in combination with Embodiment 1 shown in FIG. 5a and the Embodiment 3 shown in FIG. 5c. For example, the PIN server determines during PIN creation that a PINE can act as the PEGC in the PIN. However, for some causes, although a PEGC agrees to act as the PEGC, it becomes unreachable when the PEMC sends a PIN notification message. If the primary PEGC is unreachable, the PEMC can use a secondary PEGC as the primary PEGC in the PIN; if a secondary PEGC is unreachable, the PEMC can use the primary PEGC as the primary PEGC in the PIN and ignore the PEGCs that reject or are unreachable. After that, the PEMC may also use Embodiment 1, reporting information about PEGCs incapable of serving the PIN to the PIN server while ignoring the PEGCs that reject or are unreachable.

For the information processing method provided in this embodiment of this application, the execution subject may be an information processing apparatus. The embodiments of this application use the information processing apparatus performing the information processing method as an example to describe the information processing apparatus provided in the embodiments of this application.

Refer to FIG. 6. An information processing apparatus 600 provided in an embodiment of this application may be an apparatus in a PIN server.

As shown in FIG. 6, the information processing apparatus 600 may include the following modules:
a first receiving module 601, configured to receive first information, where the first information meets at least one of the following:
the first information is related to a PIN element with gateway capability PEGC; and
the first information includes a first request for requesting creation of a PIN; and
a first execution module 602, configured to perform a first operation based on the first information, where the first operation includes at least one of the following:
   determining PEGC information in the PIN;
   rejecting the first request;
   deactivating the PIN;
   updating personal IoT network element PINE information of a PEGC in the PIN; and
   sending second information to a PIN element with management capability PEMC, where the second information is used to indicate a PINE that accepts to act as a PEGC in the PIN, or the second information indicates accepting the first request.

Optionally, that the second information indicates a PINE that accepts to act as a PEGC in the PIN includes at least one of the following:
the second information indicates a PINE acting as a primary PEGC in a PIN created by the PEMC; and
the second information indicates a PINE acting as a secondary PEGC in the PIN created by the PEMC.

Optionally, the first receiving module 601 is specifically configured to:
receive, for the PIN server, the first information from the PEMC or the PINE.

Optionally, the first information includes at least one of the following:
first identification information, used to identify a PINE that does not accept to act as the PEGC in the PIN;
second identification information, used to identify a PEMC without gateway capability;
first indication information, used to indicate that the PIN is in a deactivated state or to indicate that no PEGCs are available for the PIN;
second indication information, used to indicate that a PINE corresponding to the first identification information does not accept to act as the PEGC in the PIN, or that a PEMC corresponding to the second identification information does not have gateway capability;
third indication information, used to indicate whether a PINE has or does not have gateway capability;
fourth indication information, used to indicate that a PINE accepts or rejects to act as the PEGC in the PIN;
parameter information of a PINE; and
the first request.

Optionally, the parameter information of the PINE includes at least one of the following:
a media access control MAC address of the PINE;
an Internet protocol IP address of the PINE;
a port number of the PINE; and
capability information of the PINE.

Optionally, the capability information of the PINE includes at least one of the following:
a maximum number of PINEs supported when the PINE acts as a PEGC;
a maximum transmission rate supported by the PINE;
a maximum transmission rate supported when the PINE acts as the PEGC; and
a maximum number of PINs supported when the PINE acts as the PEGC.

Optionally, the first execution module 602 is specifically configured to:
in a case that the PIN server determines based on the first information that no PEGCs are available for the PIN, rejecting the first request, or deactivating the PIN, or accepting the first request.

Optionally, the first execution module 602 is further configured to:
send seventh information to the PEMC, where the seventh information is used to indicate a cause of a PIN creation failure or a cause of PIN deactivation.

Optionally, the seventh information is used to indicate at least one of the following:
no PEGC being available; and
the PIN being not activated.

Optionally, the first execution module 602 is further configured to:
send second information to the PEMC, where the second information is used to accept the first request, and the second information includes eighth indication information, the eighth indication information being used to indicate no PEGC being available in the PIN or the PIN being not activated.

Optionally, no PEGC being available in the PIN includes:
a PEGC indicated by the PIN server to the PEMC rejects to act as the PEGC in the PIN created by the PEMC, or the PEGC indicated by the PIN server to the PEMC is unreachable, or there is no PINE that accepts to act as the PEGC in the PIN created by the PEMC; and
the PEMC has no gateway capability.

Optionally, in a case that the first information includes the first request from the PEMC, the first execution module 602 is further configured to:
send second information to the PEMC based on the first request, where the second information includes third identification information, and the third identification information is used to identify a PINE indicated by the PIN server to act as a PEGC in the PIN created by the PEMC, or the second information indicates the PEMC to request a PINE identified by the third identification information to act as a PEGC in the PIN created by the PEMC.

Optionally, the first receiving module 601 is specifically configured to:
receive third information from the PEMC, where the first information further includes the third information, and the third information is used for requesting to update a PEGC in the PIN created by the PEMC, or indicating that all PINEs corresponding to the third identification information reject to act as a PEGC in the PIN created by the PEMC, or the PEMC does not have gateway capability.

Optionally, the third identification information is used to identify at least one of the following:
a PINE acting as a primary PEGC in the PIN created by the PEMC; and
a PINE acting as a secondary PEGC in the PIN created by the PEMC.

Optionally, the first execution module 602 is specifically configured to:
update, based on the first information, information about a PINE accepting to act as a PEGC in the PIN created by the PEMC;
send, to the PEMC based on the first information, identification information of an updated PINE accepting to act as a PEGC in the PIN created by the PEMC;
send identification information of the PEMC to the PEMC based on the first information to indicate the PEMC to act as a PEGC in the PIN created by the PEMC; and
send a first response to the PEMC based on the first information, where the first response is used for rejecting the first request, or deactivating the PIN created by the PEMC, or receiving the first request.

Optionally, the first information further includes fifth indication information, and the fifth indication information is used to indicate that the PIN created by the PEMC is in a deactivated state, or to indicate that no PEGCs are available for the PIN created by the PEMC.

Optionally, the first receiving module 601 is specifically configured to:
receive registration information from a PINE, where the first information includes the registration information, and the registration information includes indication information for indicating whether the PINE has or does not have gateway capability or whether the PINE accepts or does not accept to act as a PEGC in the PIN.

Optionally, the first execution module 602 is specifically configured to perform at least one of the following:
determining, by the PIN server based on the registration information, a PINE accepting to act as a PEGC in the PIN;
in a case that the PIN server determines, based on the registration information, that the PINE accepting to act as the PEGC in the PIN changes, sending, by the PIN server, fourth information to the PEMC of the PIN, or determining that no PEGCs are available for the PIN, where the fourth information indicates a changed-to PINE accepting to act as the PEGC in the PIN;
in a case that the first request is received from the PEMC, if it is determined that there is a target PINE in registered PINEs that accepts to act as a PEGC in the PIN created by the PEMC, sending, by the PIN server, sixth indication information to the PEMC, where the sixth indication information indicates that the PEMC requests the target PINE to act as a PEGC in the PIN created by the PEMC; or
in a case that the first request is received from the PEMC, if it is determined that there is no target PINE in registered PINEs that accepts to act as a PEGC in the PIN created by the PEMC, sending, by the PIN server, seventh indication information to the PEMC, where the seventh indication information indicates the PEMC to act as a PEGC in the PIN created by the PEMC, or indicates that the PIN created by the PEMC is in a deactivated state, or rejects to create the PIN by the PEMC.

Optionally, the fourth information includes at least one of the following:
identification information of the changed-to PINE accepting to act as the PEGC in the PIN;
a modification type;
identification information of the PIN;
PIN profile information; and
dynamic PIN profile information.

Optionally, in a case that the first information includes the first request from the PEMC, the first execution module 602 is further configured to:
send a second request to a first PINE, where the second request is used to request the first PINE to act as a PEGC in the PIN created by the PEMC.

The first receiving module 601 is further configured to:
receive a second response from the first PINE, where the second response carries the first information, and the first information indicates that the first PINE accepts or rejects to act as a PEGC in the PIN created by the PEMC.

Optionally, the first execution module 602 is further configured to perform at least one of the following:
update, based on the second response, information about the PINE accepting to act as a PEGC in the PIN created by the PEMC;
send identification information of a target first PINE to the PEMC based on the second response, where the target first PINE is a first PINE that accepts to act as a PEGC in the PIN created by the PEMC;
send identification information of the PEMC to the PEMC based on the second response to indicate the PEMC to act as a PEGC in the PIN created by the PEMC; and
send a first response to the PEMC based on the second response, where the first response is used to respond to the first request.

Optionally, the first execution module 602 is further configured to:
receive fifth information from the PEMC, where the fifth information indicates that the PEMC accepts or does not accept to act as a PEGC in the PIN created by the PEMC, or that the PEMC has or does not have gateway capability.

Optionally, in a case that the PIN server determines that there is no PEGC available in the PIN created by the PEMC, the first response is used to reject the first request, or to deactivate the PIN created by the PEMC, or to accept the first request.

Optionally, the first information further includes PEMC related information or PIN related information; and
the first operation further includes:
updating sixth information, where the sixth information includes at least one of the following:
PEMC information; and
PIN profile information.

The information processing apparatus 600 provided in this embodiment of this application is capable of implementing the processes implemented in the method embodiment shown in FIG. 2, with the same technical effects achieved. To avoid repetition, details are not described herein again.

For the information transmission method provided in this embodiment of this application, the execution subject may be an information transmission apparatus. In the embodiments of this application, the information transmission apparatus provided in the embodiments of this application is described by using the information transmission method being executed by the information transmission apparatus as an example.

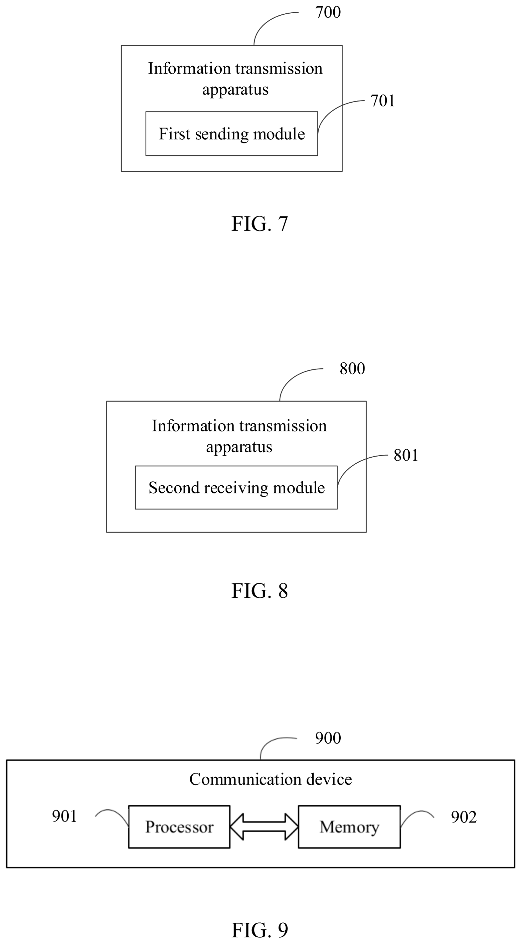

Refer to FIG. 7. An information transmission apparatus 700 provided in an embodiment of this application may be an apparatus in a PEMC.

As shown in FIG. 7, the information transmission apparatus 700 may include the following module:
a first sending module 701, configured to send first information to a PIN server; where
the first information includes at least one of the following:
   first identification information, used to identify a PINE that does not accept to act as the PEGC in the PIN;
   second identification information, used to identify a PEMC, where the PEMC has no gateway capability;
   first indication information, used to indicate that a PIN created by the PEMC is in a deactivated state or indicate that no PEGCs are available for the PIN;
   second indication information, used to indicate that a PINE corresponding to the first identification information does not accept to act as the PEGC in the PIN, or that a PEMC corresponding to the second identification information does not have gateway capability; and
   a first request, where the first request is used to request creation of a PIN.

Optionally, the information transmission apparatus 700 further includes:
a second receiving module, configured to receive second information from the PIN server, where the second information is used to indicate a second PINE that accepts to act as a PEGC in the PIN created by the PEMC, or the second information indicates accepting the first request; and
a second execution module, configured to: based on the second information, determine a PEGC in a PI, or create a deactivated PIN.

Optionally, the information transmission apparatus 700 further includes:
a third sending module, configured to send a third request to a second PINE, where the third request is used to request the second PINE to act as a PEGC in the PIN created by the PEMC.

Optionally, the information transmission apparatus 700 further includes:
a third receiving module, configured to receive a third response from the second PINE, where the third response is used to indicate that the second PINE accepts or rejects to act as a PEGC in the PIN.

Optionally, the first information is further used to request to update the PEGC in the PIN created by the PEMC, or to indicate that all second PINEs reject to act as a PEGC in the PIN created by the PEMC.

Optionally, the second PINE includes:
a PINE acting as a primary PEGC in the PIN created by the PEMC; and
a PINE acting as a secondary PEGC in the PIN created by the PEMC.

Optionally, the second execution module is specifically configured to perform at least one of the following:
in a case that the primary PEGC is unreachable or rejects to act as the PEGC in the PIN created by the PEMC, and at least one secondary PEGC does not reject to act as the PEGC in the PIN created by the PEMC, using, by the PEMC, a secondary PEGC as the primary PEGC in the PIN created by the PEMC;
in a case that the primary PEGC is reachable and does not reject to act as the PEGC in the PIN created by the PEMC, using, by the PEMC, a primary PEGC as the primary PEGC in the PIN created by the PEMC; and
in a case that the primary PEGC is reachable and does not reject to act as the PEGC in the PIN created by the PEMC, ignoring, by the PEMC, a target PEGC, where the target PEGC is unreachable or rejects to act as the PEGC in the PIN created by the PEMC.

Optionally, the second execution module is further configured to:
in a case that the second information is used to accept the first request, if the second information includes eighth indication information and the eighth indication information indicates that no PEGCs are available for the PIN or the PIN is not activated, create the deactivated PIN.

Optionally, the information transmission apparatus 700 further includes:
a sixth receiving module, configured to receive seventh information from the PIN server, where the seventh information is used to indicate a cause of a PIN creation failure or a cause of PIN deactivation.

Optionally, the seventh information is used to indicate at least one of the following:
no PEGC being available; and
the PIN being not activated.

Optionally, the information transmission apparatus 700 further includes:
a fifth sending module, configured to send ninth indication information to a PINE in the PIN based on the seventh information or the eighth indication information, where the ninth indication information is used to indicate at least one of the following: no PEGC is available in the PIN, no gateways are available for the PIN, and the PIN is not activated.

The information transmission apparatus 700 provided in this embodiment of this application is capable of implementing the processes implemented in the method embodiment shown in FIG. 3, with the same technical effects achieved. To avoid repetition, details are not described herein again.

Refer to FIG. 8. An information transmission apparatus 800 provided in an embodiment of this application may be an apparatus in a PINE.

As shown in FIG. 8, the information transmission apparatus 800 may include the following module:
a second sending module 801, configured to send first information to a PIN server; where
the first information includes at least one of the following:
   third indication information, used to indicate whether a PINE has or does not have gateway capability;
   fourth indication information, used to indicate that a PINE accepts or rejects to act as a PEGC in a PIN; and
   parameter information of a PINE.

Optionally, the parameter information of the PINE includes at least one of the following:
a media access control MAC address of the PINE;
an Internet protocol IP address of the PINE;
a port number of the PINE; and
capability information of the PINE.

Optionally, the capability information of the PINE includes at least one of the following:
a maximum number of PINEs supported when the PINE acts as a PEGC;
a maximum transmission rate supported by the PINE;
a maximum transmission rate supported when the PINE acts as the PEGC; and
a maximum number of PINs supported when the PINE acts as the PEGC.

Optionally, the second sending module 801 is specifically configured to:
send registration information to the PIN server, where the first information includes the registration information, and the registration information is used to indicate whether the PINE has or does not have gateway capability, or to indicate whether the PINE accepts or does not accept to act as the PEGC in the PIN.

Optionally, the information transmission apparatus 800 further includes:
a fourth receiving module, configured to receive a second request from the PIN server, where the second request is used to request the PINE to act as a PEGC in the PIN.

The second sending module 801 is further configured to:
send a second response to the PIN server, where the second response carries the first information and the first information indicates that the PINE accepts or rejects to act as a PEGC in the PIN.

Optionally, the information transmission apparatus 800 further includes:
a fifth receiving module, configured to receive a third request from the PEMC, where the third request is used to request the PINE to act as a PEGC in the PIN created by the PEMC; and
a fourth sending module, configured to send a third response to the PEMC, where the third response is used to indicate that the PINE accepts or rejects to act as a PEGC in the PIN.

The information transmission apparatus 800 provided in this embodiment of this application can implement the processes implemented in the method embodiment in FIG. 4, with the same technical effects achieved. To avoid repetition, details are not described herein again.

As shown in FIG. 9, an embodiment of this application further provides a communication device 900, including a processor 901 and a memory 902. A program or instructions capable of running on the processor 901 are stored in the memory 902. For example, when the communication device 900 is a PIN server and when the program or the instructions are executed by the processor 901, the steps of the foregoing embodiments of the method shown in FIG. 2 are implemented, with the same technical effects achieved. When the communication device 900 is a PEMC, and the program or instructions are executed by the processor 901, the steps of the foregoing embodiments of the method shown in FIG. 3 are implemented, with the same technical effects achieved. When the communication device 900 is a PINE, and the program or instructions are executed by the processor 901, the steps of the foregoing embodiments of the method shown in FIG. 4 are implemented, with the same technical effects achieved. To avoid repetition, details are not described herein again.

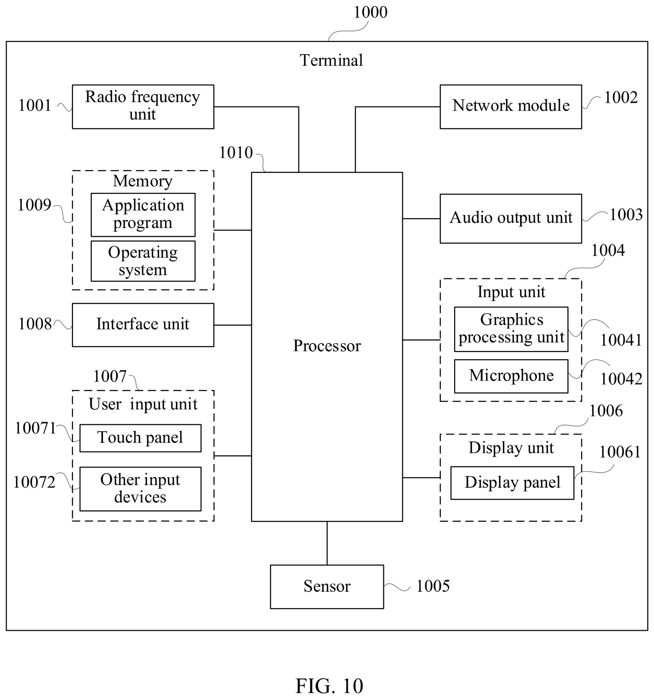

An embodiment of this application further provides a terminal, which includes a processor and a communication interface, where the communication interface is coupled to the processor, and the processor is configured to run a program or instructions to implement the steps of the method embodiments shown in FIG. 3 or 4. The terminal embodiment corresponds to the foregoing PEMC side method embodiment or PINE side method embodiment, and the implementation processes and implementations of the foregoing method embodiments can be applied to the terminal embodiments, with the same technical effects achieved. Specifically, FIG. 10 is a schematic diagram of a hardware structure of a terminal implementing an embodiment of this application.

The terminal 1000 includes but is not limited to at least part of components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art can understand that the terminal 1000 may further include a power supply (for example, a battery) supplying power to the components, and the power supply may be logically connected to the processor 1010 through a power management system. In this way, functions such as charge management, discharge management, and power consumption management are implemented by using the power management system. The structure of the terminal shown in FIG. 10 does not constitute any limitation on the terminal. The terminal may include more or fewer components than shown in the figure, or a combination of some components, or the components disposed differently. Details are not described herein again.

It can be understood that in this embodiment of this application, the input unit 1004 may include a graphics processing unit (Graphics Processing Unit, GPU) 10041 and a microphone 10042. The graphics processing unit 10041 processes image data of a still picture or video obtained by an image capture apparatus (such as a camera) in a video capture mode or an image capture mode. The display unit 1006 may include a display panel 10061. The display panel 10061 may be configured in a form of a liquid crystal display, an organic light-emitting diode display, or the like. The user input unit 1007 includes at least one of a touch panel 10071 and other input devices 10072. The touch panel 10071 is also referred to as a touchscreen. The touch panel 10071 may include two parts: a touch detection apparatus and a touch controller. The other input devices 10072 may include but be not limited to a physical keyboard, a function key (such as a volume control key or an on/off key), a trackball, a mouse, and a joystick. Details are not described herein.

In this embodiment of this application, after receiving downlink data from a network-side device, the radio frequency unit 1001 sends the downlink data to the processor 1010 for processing; and the radio frequency unit 1001 also sends uplink data to the network-side device. Generally, the radio frequency unit 1001 includes but is not limited to an antenna, an amplifier, a transceiver, a coupler, a low noise amplifier, a duplexer, and the like.

The memory 1009 may be configured to store software programs or instructions and various data. The memory 1009 may mainly include a first storage area for storing programs or instructions and a second storage area for storing data, where the first storage area may store an operating system, an application program or instructions required by at least one function (for example, an audio playing function and an image playing function), and the like. Further, the memory 1009 may include a volatile memory or a nonvolatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct memory bus random access memory (Direct Rambus RAM, DRRAM). The memory 1009 described in the embodiments of this application is intended to include but is not limited to these and any other suitable types of memories.

The processor 1010 may include one or more processing units. Optionally, the processor 1010 integrates an application processor and a modem processor. The application processor mainly processes operations related to an operating system, a user interface, an application program, and the like. The modem processor mainly processes wireless communication signals, for example, a baseband processor. It can be understood that the modem processor may alternatively be not integrated in the processor 1010.

In an implementation, the terminal 1000 acts as a PEMC.

The radio frequency unit 1001 is configured to send first information to a PIN server; where
the first information includes at least one of the following:
first identification information, used to identify a PINE that does not accept to act as the PEGC in the PIN;
second identification information, used to identify the PEMC, where the PEMC has no gateway capability;
first indication information, used to indicate that a PIN created by the PEMC is in a deactivated state or indicate that no PEGCs are available for the PIN;
second indication information, used to indicate that a PINE corresponding to the first identification information does not accept to act as the PEGC in the PIN, or that a PEMC corresponding to the second identification information does not have gateway capability; and
a first request, where the first request is used to request creation of a PIN.

Optionally, the radio frequency unit 1001 is further configured to receive second information from the PIN server, where the second information is used to indicate a second PINE that accepts to act as a PEGC in the PIN created by the PEMC, or the second information indicates accepting the first request; and
The processor 1010 is configured to: based on the second information, determine a PEGC in a PIN created by the PEMC, or create a deactivated PIN.

Optionally, the radio frequency unit 1001 is further configured to send a third request to a second PINE, where the third request is used to request the second PINE to act as a PEGC in the PIN created by the PEMC.

Optionally, the radio frequency unit 1001 is further configured to receive a third response from the second PINE, where the third response is used to indicate that the second PINE accepts or rejects to act as a PEGC in the PIN.

Optionally, the first information is further used to request to update the PEGC in the PIN created by the PEMC, or to indicate that all second PINEs reject to act as a PEGC in the PIN created by the PEMC.

Optionally, the second PINE includes:
a PINE acting as a primary PEGC in the PIN created by the PEMC; and
a PINE acting as a secondary PEGC in the PIN created by the PEMC.

Optionally, that the processor 1010 determines, based on the second information, a PEGC in the PIN created by the PEMC includes at least one of the following:
in a case that the primary PEGC is unreachable or rejects to act as the PEGC in the PIN created by the PEMC, and at least one secondary PEGC does not reject to act as the PEGC in the PIN created by the PEMC, using a secondary PEGC as the primary PEGC in the PIN created by the PEMC;
in a case that the primary PEGC is reachable and does not reject to act as the PEGC in the PIN created by the PEMC, using a primary PEGC as the primary PEGC in the PIN created by the PEMC; and
in a case that the primary PEGC is reachable and does not reject to act as the PEGC in the PIN created by the PEMC, ignoring a target PEGC, where the target PEGC is unreachable or rejects to act as the PEGC in the PIN created by the PEMC.

Optionally, that the processor 1010 creates the deactivated PIN based on the second information includes:
in a case that the second information is used to accept the first request, if the second information includes eighth indication information and the eighth indication information indicates that no PEGCs are available for the PIN or the PIN is not activated, creating the deactivated PIN.

Optionally, the radio frequency unit 1001 is further configured to receive seventh information from the PIN server, where the seventh information is used to indicate a cause of a PIN creation failure or a cause of PIN deactivation.

Optionally, the seventh information is used to indicate at least one of the following:
no PEGC being available; and
the PIN being not activated.

Optionally, the radio frequency unit 1001 is further configured to send ninth indication information to a PINE in the PIN based on the seventh information or the eighth indication information, where the ninth indication information is used to indicate at least one of the following: no PEGC is available in the PIN, there is no gateway available in the PIN, and the PIN is not activated.

It can be understood that for the implementation processes of the implementations mentioned in this embodiment, reference may be made to the related descriptions of the information transmission method embodiments shown in FIG. 3, with the same or corresponding technical effects achieved. To avoid repetition, details are not described herein again.

In another implementation, the terminal 1000 acts as a PINE.

The radio frequency unit 1001 is configured to send first information to a PIN server; where
the first information includes at least one of the following:
third indication information, used to indicate whether the PINE has or does not have gateway capability;
fourth indication information, used to indicate that the PINE accepts or rejects to act as a PEGC in a PIN; and
parameter information of the PINE.

Optionally, the parameter information of the PINE includes at least one of the following:
a media access control MAC address of the PINE;
an Internet protocol IP address of the PINE;
a port number of the PINE; and
capability information of the PINE.

Optionally, the capability information of the PINE includes at least one of the following:
a maximum number of PINEs supported when the PINE acts as a PEGC;
a maximum transmission rate supported by the PINE;
a maximum transmission rate supported when the PINE acts as the PEGC; and
a maximum number of PINs supported when the PINE acts as the PEGC.

Optionally, that the radio frequency unit 1001 sends the first information to the PIN server includes:
sending registration information to the PIN server, where the first information includes the registration information, and the registration information is used to indicate whether the PINE has or does not have gateway capability, or to indicate whether the PINE accepts or does not accept to act as the PEGC in the PIN.

Optionally, the radio frequency unit 1001 is further configured to receive a second request from the PIN server, where the second request is used to request the PINE to act as a PEGC in the PIN.

That the radio frequency unit 1001 sends the first information to the PIN server includes:
sending a second response to the PIN server, where the second response carries the first information and the first information indicates that the PINE accepts or rejects to act as a PEGC in the PIN.

Optionally, the radio frequency unit 1001 is further configured to:
receive a third request from the PEMC, where the third request is used to request the PINE to act as a PEGC in the PIN created by the PEMC; and
send a third response to the PEMC, where the third response is used to indicate that the PINE accepts or rejects to act as a PEGC in the PIN.

It can be understood that the implementation process of each implementation mentioned in this embodiment can refer to the related description of the embodiment of the information transmission method shown in FIG. 4, and achieve the same or corresponding technical effects, so as to avoid repetition, they are not repeated here.

An embodiment of this application further provides a network-side device, which includes a processor and a communication interface, where the communication interface is coupled to the processor, and the processor is configured to run a program or instructions to implement the steps of the method embodiments shown in FIG. 2 or FIG. 3 or FIG. 4. The network-side device embodiment corresponds to the PIN server-side method embodiment, the PEMC-side method embodiment or PINE-side method embodiment, and the implementation processes and implementations of the foregoing method embodiments can be applied to the network-side device embodiments, with the same technical effects achieved.

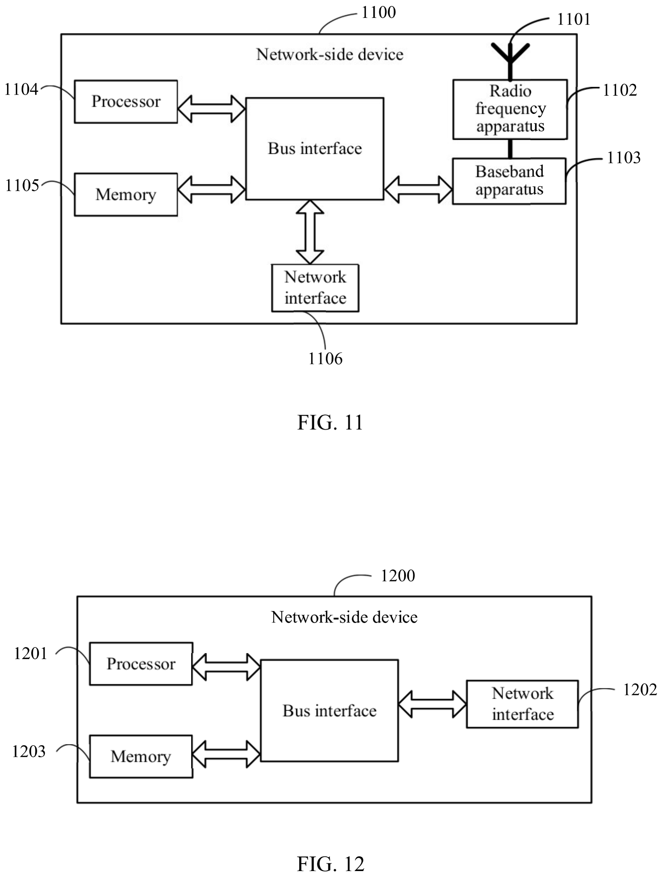

Specifically, an embodiment of this application further provides a network-side device. As shown in FIG. 11, the network-side device 1100 includes an antenna 1101, a radio frequency apparatus 1102, a baseband apparatus 1103, a processor 1104, and memory 1105. The antenna 1101 is connected to the radio frequency apparatus 1102. In an uplink direction, the radio frequency apparatus 1102 receives information by using the antenna 1101, and sends the received information to the baseband apparatus 1103 for processing. In a downlink direction, the baseband apparatus 1103 processes to-be-sent information, and sends the information to the radio frequency apparatus 1102; and the radio frequency apparatus 1102 processes the received information and then sends the information out by using the antenna 1101.

The method executed by the network-side device in the foregoing embodiments may be implemented on the baseband apparatus 1103. The baseband apparatus 1103 includes a baseband processor.

The baseband apparatus 1103 may include, for example, at least one baseband board, where a plurality of chips are disposed on the baseband board. As shown in FIG. 11, one of the chips is, for example, the baseband processor, and connected to the memory 1105 through a bus interface, to invoke the program in the memory 1105 to perform the operations of the network device shown in the foregoing method embodiment.

The network-side device may further include a network interface 1106, where the interface is, for example, a common public radio interface (Common Public Radio Interface, CPRI).

Specifically, the network-side device 1100 in this embodiment of this application further includes: instructions or a program stored in the memory 1105 and capable of running on the processor 1104. The processor 1104 invokes the instructions or program in the memory 1105 to execute the method executed by the modules shown in FIG. 6 or FIG. 7 or FIG. 8, with the same technical effects achieved. To avoid repetition, details are not described herein again.

Specifically, an embodiment of this application further provides a network-side device. As shown in FIG. 12, the network-side device 1200 includes a processor 1201, a network interface 1202, and a memory 1203. The network interface 1202 is, for example, a common public radio interface (Common Public Radio Interface, CPRI).

Specifically, the network-side device 1200 according to this embodiment of this application further includes instructions or programs stored in the memory 1203 and capable of running on the processor 1201, and the processor 1201 calls the instructions or programs in the memory 1203 to execute the methods performed by the modules shown in FIG. 6, with the same technical effects achieved. To avoid repetition, details are not described herein again.

An embodiment of this application further provides a readable storage medium, where the readable storage medium stores a program or instructions, and when the program or the instructions are executed by a processor, the processes of the foregoing embodiments of the method shown in FIG. 2 or FIG. 3 or FIG. 4 may be implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip, where the chip includes a processor and a communication interface, the communication interface is coupled to the processor, and the processor is configured to run a program or instructions, so as to implement the processes of the method embodiment shown in FIG. 2 or FIG. 3 to FIG. 4, with the same technical effects achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and when being executed by at least one processor, the computer program/program product is configured to implement the processes shown in FIG. 2 or FIG. 3 or FIG. 4 and the foregoing method embodiments, with the same technical effects achieved. To avoid repetition, details are not repeated herein.

An embodiment of this application further provides a communication system, which includes a PIN server, a PEMC, and a PINE, where the PIN server can be configured to perform the steps of the method embodiment shown in FIG. 2, the PEMC can be configured to perform the steps of the method embodiment shown in FIG. 3, and the PINE can be configured to perform the steps of the method embodiment shown in FIG. 4.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples, embodiments, or implementations may be combined in other examples, embodiments, or implementations.

By means of the foregoing description of the implementations, persons skilled in the art may clearly understand that the method in the foregoing embodiment may be implemented by a computer software product with a hardware platform. Certainly, the method in the foregoing embodiment may also be implemented by hardware. The computer software product is stored in a storage medium (such as a ROM, a RAM, a magnetic disk, or an optical disc), and includes several instructions to enable a terminal or a network-side device to execute the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other implementation manners without departing from principles of this application and the protection scope of the claims, many and all such implementation manners fall within the protection scope of this application.

## Claims

1. An information processing method, comprising:
receiving, by a personal IoT network PIN server, first information, wherein the first information meets at least one of the following:
the first information is related to a PIN element with gateway capability PEGC; and
the first information comprises a first request for requesting creation of a PIN; and
performing, by the PIN server, a first operation based on the first information, wherein the first operation comprises at least one of the following:
determining PEGC information in the PIN;
rejecting the first request;
deactivating the PIN;
updating personal IoT network element PINE information of a PEGC in the PIN; and
sending second information to a PIN element with management capability PEMC, wherein the second information is used to indicate a PINE that accepts to act as a PEGC in the PIN, or the second information indicates accepting the first request.

2. The method according to claim 1, wherein that the second information indicates a PINE that accepts to act as a PEGC in the PIN comprises at least one of the following:
the second information indicates a PINE acting as a primary PEGC in a PIN created by the PEMC; and
the second information indicates a PINE acting as a secondary PEGC in the PIN created by the PEMC.

3. The method according to claim 1 or 2, wherein the receiving, by a PIN server, first information comprises:
receiving, by the PIN server, the first information from the PEMC or the PINE.

4. The method according to any one of claims 1 to 3, wherein the first information comprises at least one of the following:
first identification information, used to identify a PINE that does not accept to act as the PEGC in the PIN;
second identification information, used to identify a PEMC without gateway capability;
first indication information, used to indicate that the PIN is in a deactivated state or to indicate that no PEGCs are available for the PIN;
second indication information, used to indicate that a PINE corresponding to the first identification information does not accept to act as the PEGC in the PIN, or that a PEMC corresponding to the second identification information does not have gateway capability;
third indication information, used to indicate whether a PINE has or does not have gateway capability;
fourth indication information, used to indicate that a PINE accepts or rejects to act as the PEGC in the PIN;
parameter information of a PINE; and
the first request.

5. The method according to claim 4, wherein the parameter information of the PINE comprises at least one of the following:
a media access control MAC address of the PINE;
an Internet protocol IP address of the PINE;
a port number of the PINE; and
capability information of the PINE.

6. The method according to claim 5, wherein the capability information of the PINE comprises at least one of the following:
a maximum number of PINEs supported when the PINE acts as a PEGC;
a maximum transmission rate supported by the PINE;
a maximum transmission rate supported when the PINE acts as the PEGC; and
a maximum number of PINs supported when the PINE acts as the PEGC.

7. The method according to any one of claims 1 to 6, wherein the performing, by the PIN server, a first operation based on the first information comprises:
in a case that the PIN server determines based on the first information that no PEGCs are available for the PIN, rejecting the first request, or deactivating the PIN, or accepting the first request.

8. The method according to claim 7, wherein the rejecting the first request or deactivating the PIN comprises:
sending, by the PIN server, seventh information to the PEMC, wherein the seventh information is used to indicate a cause of a PIN creation failure or a cause of PIN deactivation.

9. The method according to claim 8, wherein the seventh information is used to indicate at least one of the following:
no PEGC being available; and
the PIN being not activated.

10. The method according to claim 7, wherein the accepting the first request comprises:
sending, by the PIN server, second information to the PEMC, wherein the second information is used to accept the first request, and the second information comprises eighth indication information, the eighth indication information being used to indicate no PEGC being available in the PIN or the PIN being not activated.

11. The method according to any one of claims 7 to 10, wherein no PEGC being available in the PIN comprises:
a PEGC indicated by the PIN server to the PEMC rejects to act as the PEGC in the PIN created by the PEMC, or the PEGC indicated by the PIN server to the PEMC is unreachable, or there is no PINE that accepts to act as the PEGC in the PIN created by the PEMC; and
the PEMC has no gateway capability.

12. The method according to any one of claims 1 to 11, wherein in a case that the first information comprises the first request from the PEMC, the performing, by the PIN server, a first operation based on the first information comprises:
sending, by the PIN server, second information to the PEMC based on the first request, wherein the second information comprises third identification information, and the third identification information is used to identify a PINE indicated by the PIN server to act as a PEGC in the PIN created by the PEMC, or the second information indicates the PEMC to request a PINE identified by the third identification information to act as a PEGC in the PIN created by the PEMC.

13. The method according to claim 12, wherein the receiving, by a PIN server, first information further comprises:
receiving, by the PIN server, third information from the PEMC, wherein the first information further comprises the third information, and the third information is used for requesting to update a PEGC in the PIN created by the PEMC, or indicating that all PINEs corresponding to the third identification information reject to act as a PEGC in the PIN created by the PEMC, or the PEMC does not have gateway capability.

14. The method according to claim 12 or 13, wherein the third identification information is used to identify at least one of the following:
a PINE acting as a primary PEGC in the PIN created by the PEMC; and
a PINE acting as a secondary PEGC in the PIN created by the PEMC.

15. The method according to any one of claims 12 to 14, wherein the PIN server performs at least one of the following based on the first information:
the PIN server updates, based on the first information, information about a PINE accepting to act as a PEGC in the PIN created by the PEMC;
the PIN server sends, to the PEMC based on the first information, identification information of an updated PINE accepting to act as a PEGC in the PIN created by the PEMC;
the PIN server sends identification information of the PEMC to the PEMC based on the first information to indicate the PEMC to act as a PEGC in the PIN created by the PEMC; and
the PIN server sends a first response to the PEMC based on the first information, wherein the first response is used for rejecting the first request, or deactivating the PIN created by the PEMC, or receiving the first request.

16. The method according to any one of claims 12 to 15, wherein the first information further comprises fifth indication information, and the fifth indication information is used to indicate that the PIN created by the PEMC is in a deactivated state, or to indicate that no PEGCs are available for the PIN created by the PEMC.

17. The method according to any one of claims 1 to 16, wherein the receiving, by a PIN server, first information further comprises:
receiving, by the PIN server, registration information from a PINE, wherein the first information comprises the registration information, and the registration information comprises indication information for indicating whether the PINE has gateway capability or whether the PINE accepts to act as a PEGC in the PIN.

18. The method according to claim 17, wherein the performing, by the PIN server, a first operation based on the first information comprises at least one of the following:
determining, by the PIN server based on the registration information, a PINE accepting to act as a PEGC in the PIN;
in a case that the PIN server determines, based on the registration information, that the PINE accepting to act as the PEGC in the PIN changes, sending, by the PIN server, fourth information to the PEMC of the PIN, or determining that no PEGCs are available for the PIN, wherein the fourth information indicates a changed-to PINE accepting to act as the PEGC in the PIN;
in a case that the first request is received from the PEMC, if it is determined that there is a target PINE in registered PINEs that accepts to act as a PEGC in the PIN created by the PEMC, sending, by the PIN server, sixth indication information to the PEMC, wherein the sixth indication information indicates that the PEMC requests the target PINE to act as a PEGC in the PIN created by the PEMC; or
in a case that the first request is received from the PEMC, if it is determined that there is no target PINE in registered PINEs that accepts to act as a PEGC in the PIN created by the PEMC, sending, by the PIN server, seventh indication information to the PEMC, wherein the seventh indication information indicates the PEMC to act as a PEGC in the PIN created by the PEMC, or indicates that the PIN created by the PEMC is in a deactivated state, or rejects to create the PIN by the PEMC.

19. The method according to claim 18, wherein the fourth information comprises at least one of the following:
identification information of the changed-to PINE accepting to act as the PEGC in the PIN;
a modification type;
identification information of the PIN;
PIN profile information; and
dynamic PIN profile information.

20. The method according to any one of claims 1 to 16, wherein in a case that the first information comprises the first request from the PEMC, the performing, by the PIN server, a first operation based on the first information comprises:
sending, by the PIN server, a second request to a first PINE, wherein the second request is used to request the first PINE to act as a PEGC in the PIN created by the PEMC; and
the receiving, by a PIN server, first information comprises:
receiving, by the PIN server, a second response from the first PINE, wherein the second response carries the first information, and the first information indicates that the first PINE accepts or rejects to act as a PEGC in the PIN created by the PEMC.

21. The method according to claim 20, wherein the performing, by the PIN server, a first operation based on the first information further comprises at least one of the following:
updating, by the PIN server, based on the second response, information about the PINE accepting to act as a PEGC in the PIN created by the PEMC;
sending, by the PIN server, identification information of a target first PINE to the PEMC based on the second response, wherein the target first PINE is a first PINE that accepts to act as a PEGC in the PIN created by the PEMC;
sending, by the PIN server, identification information of the PEMC to the PEMC based on the second response to indicate the PEMC to act as a PEGC in the PIN created by the PEMC; and
sending, by the PIN server, a first response to the PEMC based on the second response, wherein the first response is used to respond to the first request.

22. The method according to claim 21, wherein after the sending, by the PIN server, identification information of the PEMC to the PEMC based on the first response to indicate the PEMC to act as a PEGC in the PIN created by the PEMC, the performing, by the PIN server, a first operation based on the first information further comprises:
receiving, by the PIN server, fifth information from the PEMC, wherein the fifth information indicates that the PEMC accepts or does not accept to act as a PEGC in the PIN created by the PEMC, or that the PEMC has or does not have gateway capability.

23. The method according to claim 21 or 22, wherein in a case that the PIN server determines that no PEGCs are available for the PIN created by the PEMC, the first response is used to reject the first request, or to deactivate the PIN created by the PEMC, or to accept the first request.

24. The method according to any one of claims 1 to 23, wherein the first information further comprises PEMC related information or PIN related information; and
the first operation further comprises:
updating sixth information, wherein the sixth information comprises at least one of the following:
PEMC information; and
PIN profile information.

25. An information transmission method, comprising:
sending, by a PEMC, first information to a PIN server; wherein
the first information comprises at least one of the following:
first identification information, used to identify a PINE that does not accept to act as the PEGC in the PIN;
second identification information, used to identify the PEMC, wherein the PEMC has no gateway capability;
first indication information, used to indicate that a PIN created by the PEMC is in a deactivated state or indicate that no PEGCs are available for the PIN;
second indication information, used to indicate that a PINE corresponding to the first identification information does not accept to act as the PEGC in the PIN, or that a PEMC corresponding to the second identification information does not have gateway capability; and
a first request, wherein the first request is used to request creation of a PIN.

26. The method according to claim 25, further comprising:
receiving, by the PEMC, second information from the PIN server, wherein the second information is used to indicate a second PINE that accepts to act as a PEGC in the PIN created by the PEMC, or the second information indicates accepting the first request; and
determining, by the PEMC based on the second information, a PEGC in a PIN created by the PEMC, or creating a deactivated PIN.

27. The method according to claim 26, further comprising:
sending, by the PEMC, a third request to a second PINE, wherein the third request is used to request the second PINE to act as a PEGC in the PIN created by the PEMC.

28. The method according to claim 27, further comprising:
receiving, by the PEMC, a third response from the second PINE, wherein the third response is used to indicate that the second PINE accepts or rejects to act as a PEGC in the PIN.

29. The method according to claim 28, wherein the first information is further used to request to update the PEGC in the PIN created by the PEMC, or to indicate that all second PINEs reject to act as a PEGC in the PIN created by the PEMC.

30. The method according to any one of claims 26 to 29, wherein the second PINE comprises:
a PINE acting as a primary PEGC in the PIN created by the PEMC; and
a PINE acting as a secondary PEGC in the PIN created by the PEMC.

31. The method according to claim 30, wherein the determining, by the PEMC based on the second information, a PEGC in a PIN created by the PEMC comprises at least one of the following:
in a case that the primary PEGC is unreachable or rejects to act as the PEGC in the PIN created by the PEMC, and at least one secondary PEGC does not reject to act as the PEGC in the PIN created by the PEMC, using, by the PEMC, a secondary PEGC as the primary PEGC in the PIN created by the PEMC;
in a case that the primary PEGC is reachable and does not reject to act as the PEGC in the PIN created by the PEMC, using, by the PEMC, a primary PEGC as the primary PEGC in the PIN created by the PEMC; and
in a case that the primary PEGC is reachable and does not reject to act as the PEGC in the PIN created by the PEMC, ignoring, by the PEMC, a target PEGC, wherein the target PEGC is unreachable or rejects to act as the PEGC in the PIN created by the PEMC.

32. The method according to any one of claims 26 to 31, wherein the creating, by the PEMC, a deactivated PIN based on the second information comprises:
in a case that the second information is used to accept the first request, if the second information comprises eighth indication information and the eighth indication information indicates that no PEGCs are available for the PIN or the PIN is not activated, creating, by the PEMC, the deactivated PIN.

33. The method according to any one of claims 25 to 32, further comprising:
receiving, by the PEMC, seventh information from the PIN server, wherein the seventh information is used to indicate a cause of a PIN creation failure or a cause of PIN deactivation.

34. The method according to claim 33, wherein the seventh information is used to indicate at least one of the following:
no PEGC being available; and
the PIN being not activated.

35. The method according to any one of claims 32 to 34, further comprising:
sending, by the PEMC, ninth indication information to a PINE in the PIN based on the seventh information or the eighth indication information, wherein the ninth indication information is used to indicate at least one of the following: no PEGC is available in the PIN, no gateways are available for the PIN, and the PIN is not activated.

36. An information transmission method, comprising:
sending, by a PINE, first information to a PIN server; wherein
the first information comprises at least one of the following:
third indication information, used to indicate whether the PINE has or does not have gateway capability;
fourth indication information, used to indicate that the PINE accepts or rejects to act as a PEGC in a PIN; and
parameter information of the PINE.

37. The method according to claim 36, wherein the parameter information of the PINE comprises at least one of the following:
a media access control MAC address of the PINE;
an Internet protocol IP address of the PINE;
a port number of the PINE; and
capability information of the PINE.

38. The method according to claim 37, wherein the capability information of the PINE comprises at least one of the following:
a maximum number of PINEs supported when the PINE acts as a PEGC;
a maximum transmission rate supported by the PINE;
a maximum transmission rate supported when the PINE acts as the PEGC; and
a maximum number of PINs supported when the PINE acts as the PEGC.

39. The method according to any one of claims 36 to 38, wherein the sending, by a PINE, first information to a PIN server comprises:
sending, by the PINE, registration information to the PIN server, wherein the first information comprises the registration information, and the registration information is used to indicate whether the PINE has or does not have gateway capability or indicate whether the PINE accepts or does not accept to act as the PEGC in the PIN.

40. The method according to any one of claims 36 to 39, wherein before the sending, by a PINE, first information to a PIN server, the method further comprises:
receiving, by the PINE, a second request from the PIN server, wherein the second request is used to request the PINE to act as a PEGC in the PIN; and
the sending, by a PINE, first information to a PIN server comprises:
sending, by the PINE, a second response to the PIN server, wherein the second response carries the first information and the first information indicates that the PINE accepts or rejects to act as a PEGC in the PIN.

41. The method according to any one of claims 36 to 40, further comprising:
receiving, by the PINE, a third request from the PEMC, wherein the third request is used to request the PINE to act as a PEGC in the PIN created by the PEMC; and
sending, by the PINE, a third response to the PEMC, wherein the third response is used to indicate that the PINE accepts or rejects to act as a PEGC in the PIN.

42. An information processing apparatus, comprising:
a first receiving module, configured to receive first information, wherein the first information meets at least one of the following:
the first information is related to a PIN element with gateway capability PEGC; and
the first information comprises a first request for requesting creation of a PIN; and
a first execution module, configured to perform a first operation based on the first information, wherein the first operation comprises at least one of the following:
determining PEGC information in the PIN;
rejecting the first request;
deactivating the PIN;
updating personal IoT network element PINE information of a PEGC in the PIN; and
sending second information to a PIN element with management capability PEMC, wherein the second information is used to indicate a PINE that accepts to act as a PEGC in the PIN, or the second information indicates accepting the first request.

43. An information transmission apparatus, comprising:
a first sending module, configured to send first information to a PIN server; wherein
the first information comprises at least one of the following:
first identification information, used to identify a PINE that does not accept to act as the PEGC in the PIN;
second identification information, used to identify a PEMC, wherein the PEMC has no gateway capability;
first indication information, used to indicate that a PIN created by the PEMC is in a deactivated state or indicate that no PEGCs are available for the PIN;
second indication information, used to indicate that a PINE corresponding to the first identification information does not accept to act as the PEGC in the PIN, or that a PEMC corresponding to the second identification information does not have gateway capability; and
a first request, wherein the first request is used to request creation of a PIN.

44. An information transmission apparatus, comprising:
a second sending module, configured to send first information to a PIN server; wherein
the first information comprises at least one of the following:
third indication information, used to indicate whether a PINE has or does not have gateway capability;
fourth indication information, used to indicate that a PINE accepts or rejects to act as a PEGC in a PIN; and
parameter information of a PINE.

45. A communication device, comprising a processor and a memory, wherein a program or instructions capable of running on the processor are stored in the memory, and when the program or instructions are executed by the processor, the steps of the information processing method according to any one of claims 1 to 24 are implemented; or the steps of the information transmission method according to any one of claims 25 to 41 are implemented.

46. A readable storage medium, wherein the readable storage medium stores a program or instructions, and when the program or instructions are executed by a processor, the steps of the information processing method according to any one of claims 1 to 24 are implemented, or the steps of the information transmission method according to any one of claims 25 to 41 are implemented.
